# EUROPEAN PATENT SPECIFICATION

(11) **EP 1 228 821 B1**
(45) Date of publication and mention of the grant of the patent: **06.08.2003**
(21) Application number: 02001907.1
(22) Date of filing: 30.01.2002
(51) Int. Cl.: B21D 1/12

(54) **Automobile sheet metal surface correcting equipment**
Vorrichtung zur Korrektur von Automobilkarosserieblechen
Appareil pour la correction des carrosseries des automobiles

(30) Priority: 04.02.2001 JP 2001069453
(43) Date of publication of application: 07.08.2002
(73) Proprietor: Star Co., Ltd., Fujioka-shi, Gunma-ken (JP)
(72) Inventor: Kiyotaka, Irii, Yashio-shi, Saitama-ken (JP)
(74) Representative: Rögner, Jürgen, Dipl.-Ing.

(56) References cited:
- EP-A- 0 375 630
- DE-C- 3 241 902
- US-A- 3 869 767
- US-A- 4 495 791

## Description

This invention relates to an equipment for correcting a surface of a sheet metal material for an automobile or an automobile sheet metal surface correcting equipment adapted to push or pull a surface of a sheet metal material to correct roughness or ruggedness of the surface such as deformation thereof, strain thereof or the like according to the preamble of claim 1 (see DE 3241902).

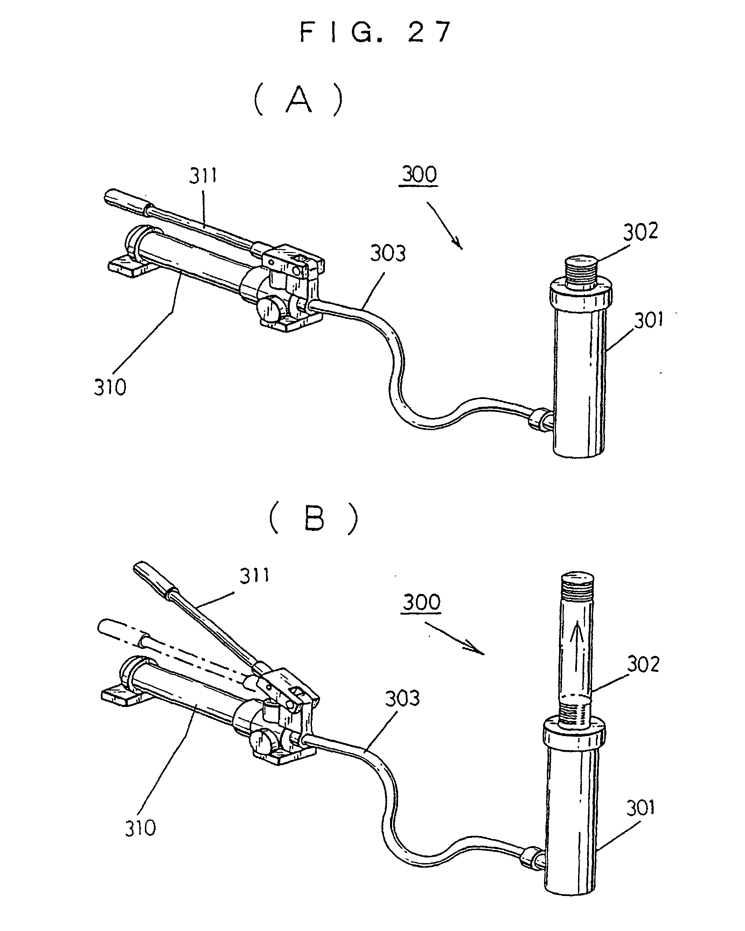

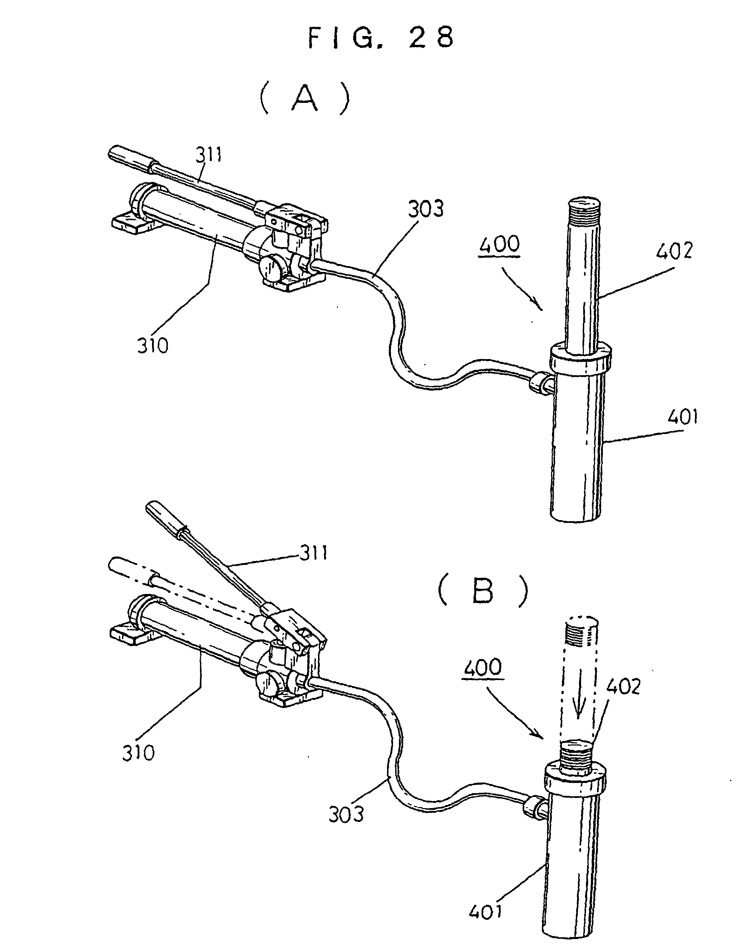

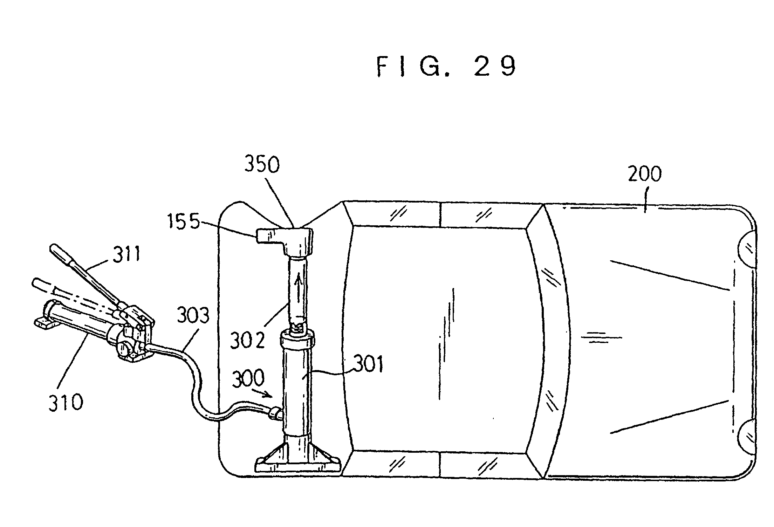

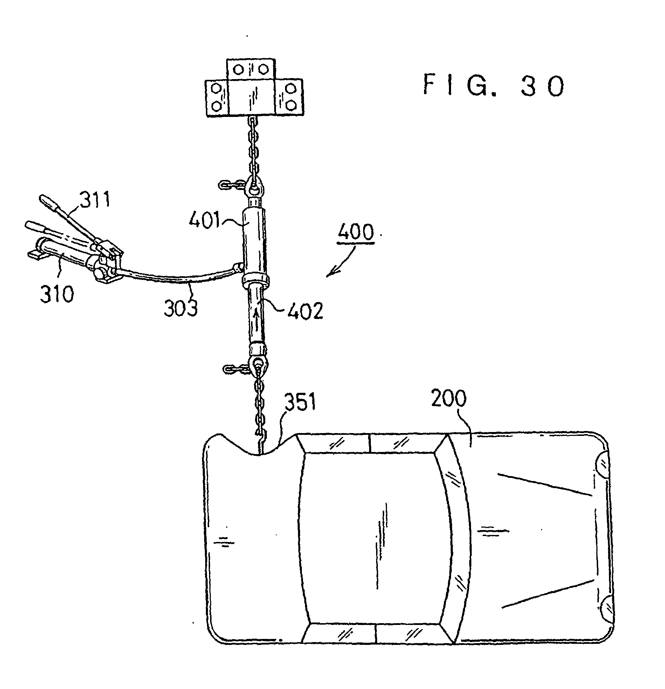

An equipment which has been conventionally used for repairing roughness or ruggedness generated on a surface of a sheet metal material of an automobile due to a traffic accident or the like is constructed in such a manner as shown in either Figs. 27(A), 27(B) and 29 or Figs. 28(A), 28(B) and 30. The conventional equipment generally designated at reference numeral 300 in Figs. 27(A), 27(B) and 29 is constructed in such a manner that a handle 311 of a hydraulic pump 310 connected through a high pressure hose 303 to a cylinder 301 in which a piston 302 is movably received is operated to extend the piston 302 from the cylinder 301, resulting in an inward projection 350 generated on a sheet metal surface of an automobile 200 being pushed out through an attachment 155 attached to a distal end of the piston 302. The conventional equipment generally designated at reference numeral 400 in Figs. 28(A), 28(B) and 30 is so constructed that a handle 311 of a hydraulic pump 310 connected through a high pressure hose 303 to a cylinder 401 having a piston 402 movably received therein is operated to retract the piston 402 into the cylinder 401, resulting in a depression 351 generated on a metal sheet surface of an automobile 200 being forced out.

Unfortunately, the prior art encounters some important disadvantages.

More particularly, in order to smoothly carry out sheet metal working for an automobile, it is required to prepare two kinds of sheet metal surface correcting equipments or such a sheet metal surface correcting equipment as shown in Figs. 27 and 29 exclusively used for force out a projection on a sheet metal surface of an automobile and that as shown in Figs. 28 and 30 exclusively used for pulling out a depression on the sheet metal surface. This causes metal sheet operation or working to be highly troublesome and expensive because two such sheet metal surface correcting equipments must be selectively applied depending on properties of the sheet metal surface.

Another disadvantage of the prior art is that there is a likelihood of causing oil to leak from the hydraulic pump during sheet metal working, leading to contamination of the automobile with the oil.

Further, the prior art renders separation of the high pressure hose from the hydraulic pump during pressurization highly difficult, to thereby fail to move or shift the hydraulic pump, so that smooth sheet metal working may not be ensured.

Moreover, the prior art is highly laborious because of requiring two workers or one for positioning the distal end of the piston on a portion of the metal sheet surface to be corrected and the other for carrying out pressurizing operation by means of the hydraulic pump.

### SUMMARY OF THE INVENTION

The present invention has been made in view of the foregoing disadvantages of the prior art.

Accordingly, it is an object of the present invention to provide an automobile sheet metal surface correcting equipment which is capable of solely selectively carrying out pushing or pulling of a sheet metal surface depending on properties of the sheet metal surface.

It is another object of the present invention to provide an automobile sheet metal surface correcting equipment which is capable of effectively preventing contamination of an automobile during sheet metal working.

It is a further object of the present invention to provide an automobile sheet metal surface correcting equipment which is capable of permitting an air hose for connecting a compressed air feed means and the sheet metal surface correcting equipment to each other therethrough to be separated from the latter in the course of advancing or retracting of a piston, to thereby facilitate correction of a site or portion of a sheet metal surface to be corrected, even when the portion requires that alignment between the piston and the portion of the surface is carried out from an inside of the metal sheet.

It is still another object of the present invention to provide an automobile sheet metal surface correcting equipment which is capable of permitting only one worker to rapidly carry out both operation of positioning a distal end of a piston on a portion of a sheet metal surface to be corrected and operation of advancing or retracting the piston, resulting in facilitating sheet metal working.

It is yet another object of the present invention to provide an automobile sheet metal surface correcting equipment which is capable of adequately withstanding a load during sheet metal drawing operation or working which readily causes the load to be applied to a housing of the equipment.

It is a still further object of the present invention to provide an automobile sheet metal surface correcting equipment which is capable of being portable and compact in structure.

In accordance with the present invention, an automobile sheet metal surface correcting equipment is provided. The automobile sheet metal surface correcting equipment includes a housing having an air flow path means switchably arranged therein, an air introduction means provided therein with air introduction passages for introducing compressed air into the housing therethrough, an impact wrench mechanism arranged in the housing and actuated by means of compressed air fed through the air introduction means into the housing, a screw bolt having rotating force applied thereto from the impact wrench mechanism, and a piston mechanism including a cylinder and a piston movably arranged in the cylinder in a retractable manner in association with rotation of the screw bolt, whereby the air flow path means in the housing is changed over to retractably move the piston of the piston mechanism, resulting in a metal sheet surface being corrected.

In a preferred embodiment of the present invention, the impact wrench mechanism includes an air motor actuated by means of compressed air fed to the housing and an impact wrench actuated by the air motor. Also, a rotation direction changing-over valve is arranged for changing over the air flow path means, to thereby change over a direction of rotation of the air motor of the impact wrench mechanism. The air flow path means includes a first air flow path and a second air flow path which are changed over by the rotation direction changing-over valve. Such construction permits a direction of rotation of the air motor to be changed over to actuate the piston of the piston mechanism, to thereby correct the sheet metal surface.

In a preferred embodiment of the present invention, holding bolts are arranged for mounting a cover means on each of end surfaces of the housing to close the end surface, whereby the air flow path means in the housing is changed over during actuation of the impact wrench mechanism to actuate the piston of the piston mechanism, resulting in correcting the sheet metal surface.

In a preferred embodiment of the present invention, holding bolts are arranged for mounting a cover means on each of end surfaces of the housing to close the end surface, whereby a direction of rotation of the air motor is changed over to actuate the piston of the piston mechanism, to thereby correct the sheet metal surface.

In a preferred embodiment of the present invention, the air introduction means includes a handle having the air introduction passages formed therein. The handle is arranged above the housing.

In a preferred embodiment of the present invention, the housing includes a first receiving portion and a second receiving portion. The first receiving portion has the impact wrench mechanism received therein. The screw bolt includes a bolt head. The second receiving portion has the bolt head of the screw bolt received therein. The housing has a first opening formed on one of the end surfaces thereof and a second opening formed on the other of the end surfaces thereof. The first opening is closed with a first cover means and the second opening is closed with a second cover means.

In a preferred embodiment of the present invention, the first cover means is formed on an inner surface thereof with a pair of air passages constituting a part of the air flow path means.

In a preferred embodiment of the present invention, the housing has a cylindrical hole formed above the first receiving portion to fit a bushing therein, wherein the bushing is formed at a lower portion thereof on a rear right side thereof with a first air outlet hole and at a lower portion thereof on a front left side thereof with a second air outlet hole. The housing has two air passages formed on both sides of the cylindrical hole. One of the air passages is arranged so as to communicate with one air passage of the first cover means and the first air outlet hole of the bushing, and the other of the air passage is arranged so as to communicate with the other air passage of the first cover means and the second air outlet hole of the bushing.

In a preferred embodiment of the present invention, the housing has a step formed on an upper surface thereof and the air introduction means includes a handle formed with the air introduction passage. The step of the housing is formed with an air introduction hole so as to communicate with the air introduction passage of the handle.

In a preferred embodiment of the present invention, the step of the housing is formed at corners thereof with threaded holes. The handle is airtightly fixed at a proximal end thereof on the step of the housing by means of bolts.

In a preferred embodiment of the present invention, the air introduction means includes a handle, an air regulator arranged on a proximal end of the handle, an air valve arranged on a central portion of a bottom surface of the handle, a switch lever disposed so as to operate the air valve, a control pin for selectively controlling movement of the switch lever, and a stopper pivotally supported in a cutout formed at a free end of the switch lever so as to be raised therein. The air valve is rendered open by operating the switch lever toward the bottom surface of the handle. Control of movement of the switch lever by the control pin is carried out in order to maintain such an open state of the air valve.

In a preferred embodiment of the present invention, the air valve includes a valve body. The valve body is disposed in a valve chest arranged between the air introduction passages. The valve body of the air valve, when the switch lever is operated to upwardly push a lower end of the air valve while abuttedly contacting it with an upper surface of the switch lever, is raised from a valve seat arranged in the valve chest, resulting in the air valve being rendered open, so that the air introduction passages may be permitted to communicate with each other, to thereby permit compressed air introduced to flow into the housing through the air introduction hole formed on the upper surface of the housing.

In a preferred embodiment of the present invention, the rotation direction changing-over valve is projected at both ends thereof from the bushing.

In a preferred embodiment of the present invention, the piston mechanism includes the piston, the cylinder and a piston guide member. The piston is constructed into a hollow structure, resulting in being provided therein with a central hole so as to extend in a longitudinal direction thereof. The central hole of the piston is formed with female threads with which male threads of the screw bolt are threadedly engaged . The piston is formed on an outer peripheral surface thereof with an elongated guide groove for guiding the piston guide member and the guide groove is arranged so as to extend in the longitudinal direction of the piston.

In a preferred embodiment of the present invention, the first cover means, housing and second cover means are integrally connected to each other by means of the holding bolts inserted through corners of the housing. The holding bolts each are threadedly engaged at a distal end thereof with each of the female screws formed in the second cover member.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings; wherein:
Fig. 1 is a perspective view showing an embodiment of an automobile sheet metal surface correcting equipment according to the present invention;
Fig. 2 is a front elevation view of the automobile sheet metal surface correcting equipment shown in Fig. 1;
Fig. 3 is a rear elevation view of the automobile sheet metal surface correcting equipment shown in Fig. 1;
Fig. 4 is a bottom view of the automobile sheet metal surface correcting equipment shown in Fig. 1;
Fig. 5 is a schematic right side elevation view of the automobile sheet metal surface correcting equipment shown in Fig. 1 in which a switch lever is kept raised and a rotational direction changing-over valve is kept forwardly forced out;
Fig. 6 is a schematic right side elevation view of the automobile sheet metal surface correcting equipment shown in Fig. 1 in which a switch lever is kept raised and a rotational direction changing-over valve is kept forced out rearwardly of a position thereof shown in Fig. 5;
Fig. 7 is a left side elevation view of the automobile sheet metal surface correcting equipment shown in Fig. 1;
Fig. 8 is a perspective view showing a cap which serves as a first cover means for covering or closing an opening formed on a rear end surface of a housing of the automobile sheet metal surface correcting equipment shown in Fig. 1;
Fig. 9 is a partially cutaway schematic perspective view in section of the automobile sheet metal surface correcting equipment of Fig. 1, which shows an internal structure of the automobile sheet metal surface correcting equipment;
Fig. 10 is a sectional view taken along line X-X of Fig. 5, which shows flow of compressed air obtained when an air motor is rotated normally or in a counter-clockwise direction to advance a piston from an interior of a cylinder;
Fig. 11 is a sectional view taken along line Y-Y of Fig. 6, which shows flow of compressed air obtained when an air motor is rotated reversely or in a clockwise direction to retract a piston into a cylinder;
Fig. 12 is a perspective view of the automobile sheet metal surface correcting equipment shown in Fig. 1, in which a piston is kept extended or advanced;
Fig. 13 is a front elevation view of the automobile sheet metal surface correcting equipment shown in Fig. 1, in which a piston is kept extended;
Fig. 14 is a rear elevation view of the automobile sheet metal surface correcting equipment shown in Fig. 1, in which a piston is kept extended;
Fig. 15 is a schematic perspective view showing an internal structure of the automobile sheet metal surface correcting equipment of Fig. 1, in which a piston is kept extended;
Fig. 16 is an exploded perspective view showing components of the automobile sheet metal surface correcting equipment of Fig. 1;
Fig. 17 is an exploded perspective view showing components of each of a housing, an air suction means, a piston mechanism and a rotation direction changing-over valve incorporated in the automobile sheet metal surface correcting equipment of Fig. 1;
Fig. 18 is an exploded perspective view showing components of an impact wrench mechanism incorporated in the automobile sheet metal surface correcting equipment of Fig. 1;
Fig. 19 is a front elevation view showing the automobile sheet metal surface correcting equipment of Fig. 1 having an attachment attached thereto;
Fig. 20 is a front elevation view showing the automobile sheet metal surface correcting equipment of Fig. 1 having an attachment attached thereto, in which a switch lever is locked by means of a control pin after being operated and a piston is kept extended;
Fig. 21 is a schematic plan view showing correcting operation for forcing out a depression of a quarter panel of a trunk room of an automobile by means of the automobile sheet metal surface correcting equipment of Fig. 1 having an attachment attached thereto;
Fig. 22 is a perspective view showing examples of an attachment which may be attached to the automobile sheet metal surface correcting equipment of Fig. 1 as desired;
Fig. 23 is a front elevation view showing the automobile sheet metal surface correcting equipment of Fig. 1 having an attachment attached thereto, in which a switch lever is locked by means of a control pin after being operated and a piston is kept extended;
Fig. 24 is a front elevation view showing the automobile sheet metal surface correcting equipment of Fig. 1 having an attachment attached thereto, in which a switch lever is locked by means of a control pin after being operated and a piston is retracted into a cylinder;
Fig. 25 is a schematic plan view showing correcting operation for pulling out a depression of a door panel of an automobile by means of the automobile sheet metal surface correcting equipment of Fig. 1 having an attachment attached thereto;
Fig. 26 is a schematic plan view showing correcting operation in which a depression of a door panel of an automobile has been pulled out by means of the automobile sheet metal surface correcting equipment of Fig. 1 having an attachment attached thereto;
Fig. 27(A) is a perspective view showing a conventional automobile sheet metal surface correcting equipment while keeping a piston from being projected or advanced;
Fig. 27(B) is a perspective view of the conventional automobile sheet metal surface correcting equipment shown in Fig. 27(A) after the piston is projected or advanced;
Fig. 28(A) is a perspective view showing another automobile sheet metal surface correcting equipment while keeping a piston projected or advanced;
Fig. 28 (B) is a perspective view of the conventional automobile sheet metal surface correcting equipment shown in Fig. 28(A) while keeping the piston retracted;
Fig. 29 is a schematic plan view showing correcting operation for forcing out an inward projection or depression of a quarter panel of a trunk room of an automobile by means of the conventional automobile sheet metal surface correcting equipment of Figs. 27(A) and 27(B): and
Fig. 30 is a schematic plan view showing correcting operation for drawing or pulling out a depression of a quarter panel of a trunk room of an automobile by means of the conventional automobile sheet metal surface correcting equipment of Figs. 28(A) and 28(B).

### DETAILED DESCRIPTION OF THE PREFERRED EMBODIMENT

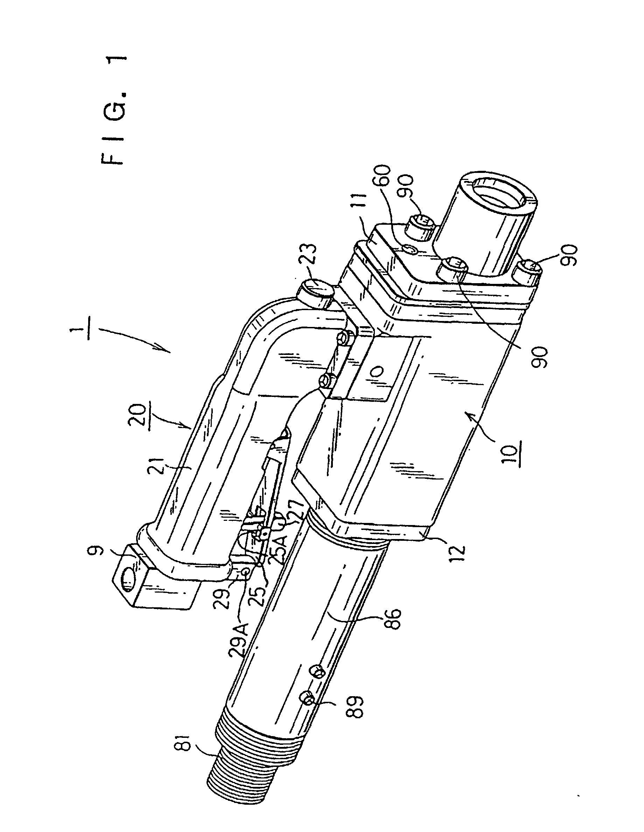

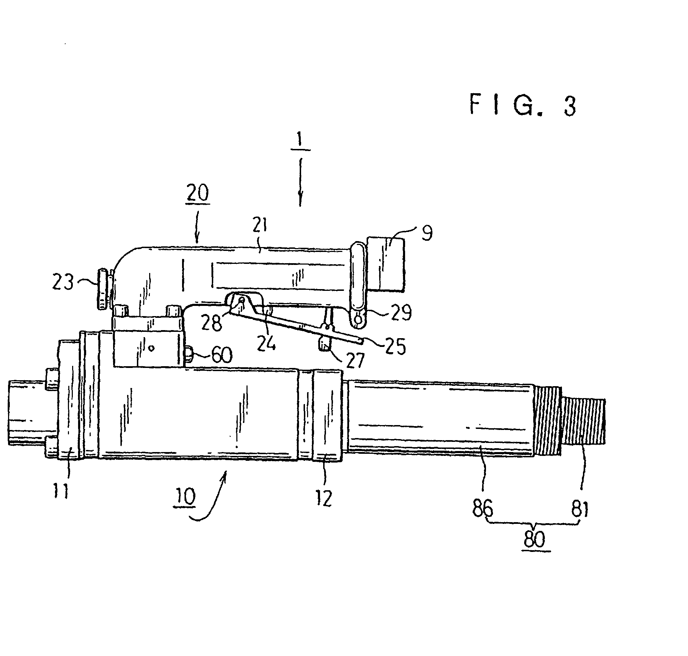

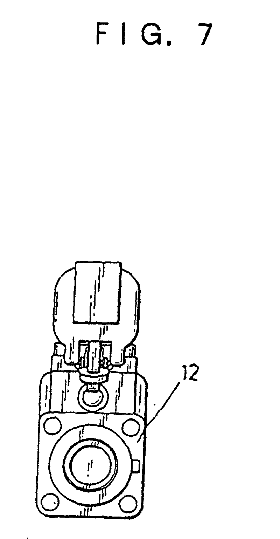

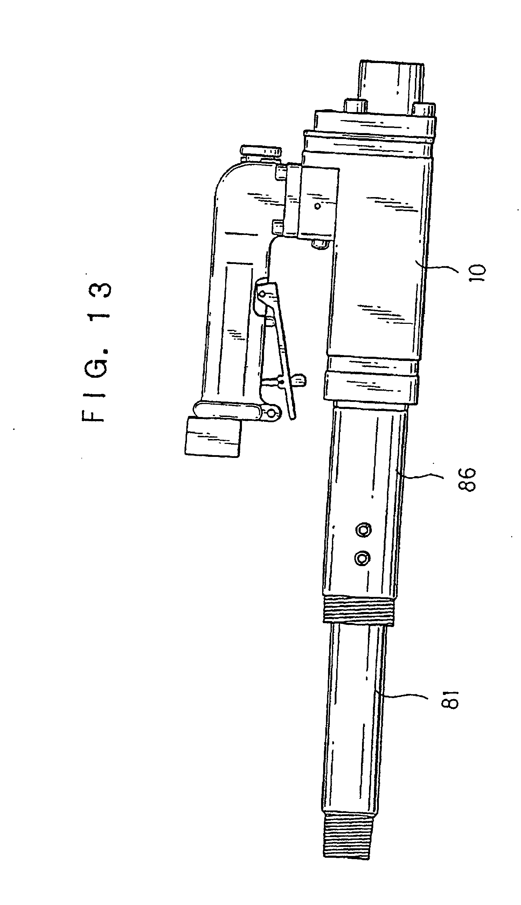

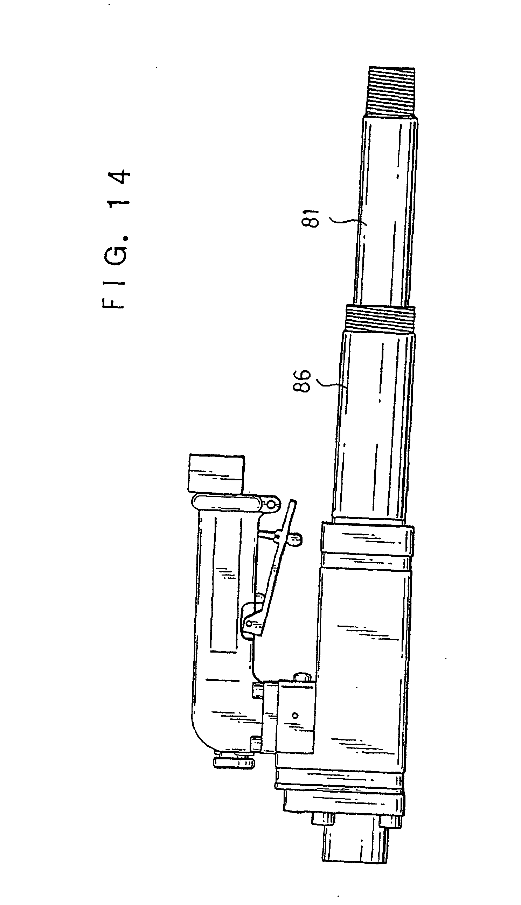

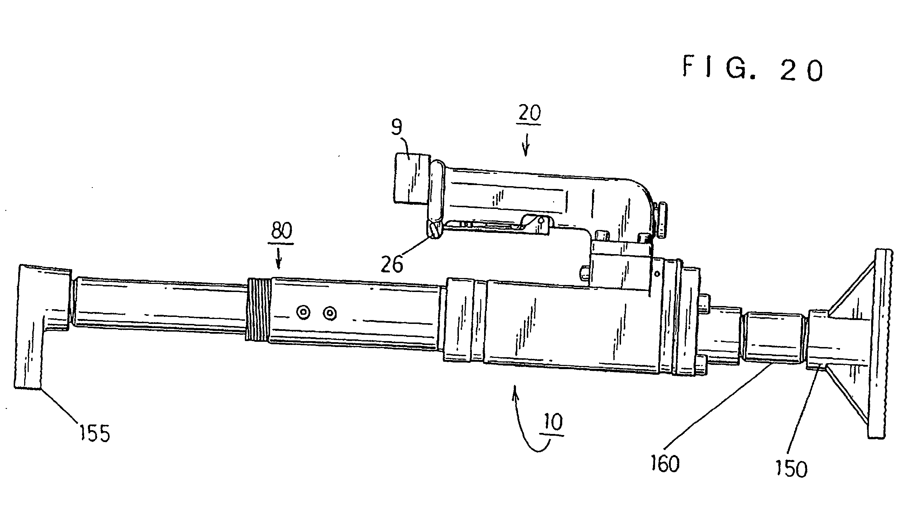

Now, an automobile sheet metal surface correcting equipment according to the present invention will be described with reference to Figs. 1 to 26, which illustrate an embodiment of an automobile sheet metal surface correcting equipment according to the present invention.

An automobile sheet metal surface correcting equipment of the illustrated which is generally designated at reference numeral 1 includes a housing 10, an air introduction means 20 which is provided therein with air introduction passages for introducing compressed air into the housing 10 therethrough, an impact wrench mechanism 30 arranged in the housing 10 and actuated by means of compressed air fed through the air introduction means 20 into the housing 10, a rotation direction changing-over valve 60 for changing over a direction of rotation of an air motor constituting the impact wrench mechanism 30, a screw bolt 70 having revolving force applied thereto from the impact wrench mechanism 30, a piston mechanism 80 including a cylinder 86 and a piston 81 movably arranged in the cylinder 86 so as to be retractable with respect to the cylinder 86, and holding bolts 90 inserted through corners of the housing 10 to mount first and second cover means 11 and 12 for covering or closing openings 10A and 10B formed on both end surfaces of the housing 10 on the housing 10.

The housing 10 is formed therein with two air passages or first and second air passages, which are changed over by the rotation direction changing-over valve 60 to retractably move the piston 81 of the piston mechanism 81, to thereby selectively push or pull a sheet metal surface, leading to correction of the sheet metal surface.

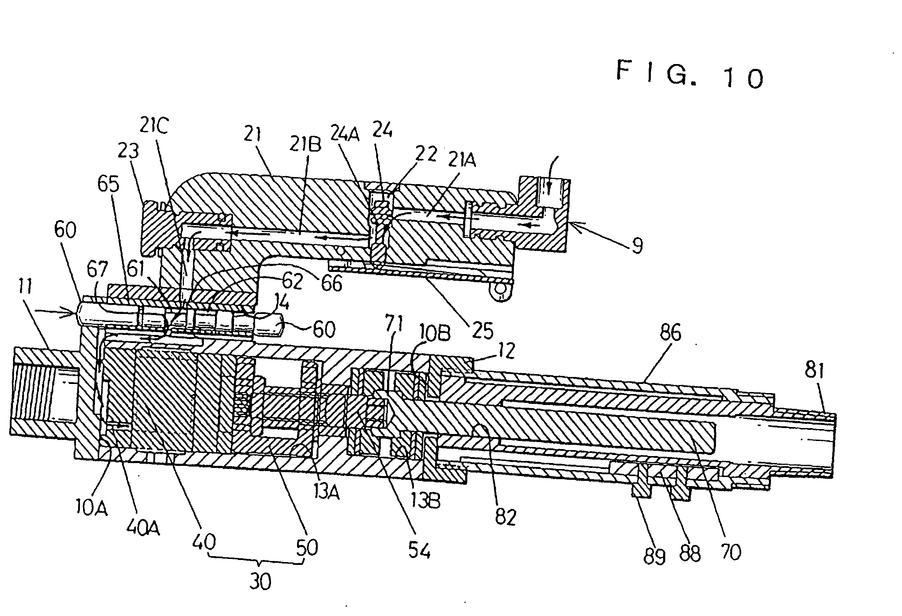

The housing 10 is formed in a rear half thereof with a first receiving portion 13A of a large diameter and in a front half thereof with a second receiving portion 13B of a small diameter, as shown in Figs. 10, 11 and 17.

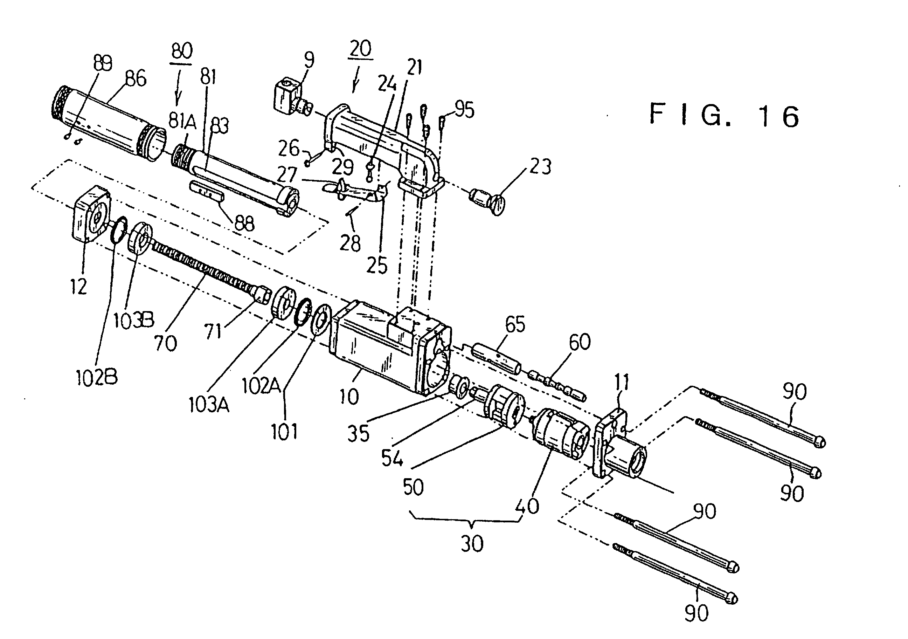

The first receiving portion 13A of the housing 10 has the impact wrench mechanism 30 and a guide member 35 received therein and the opening 10A formed on one of the end surfaces of the housing 10 is covered with a cap which acts as the first cover means 11, as shown in Fig. 16. The second receiving portion 13B of the housing 10 has a bolt head 71 of the screw bolt 70, a spacer 101, thrust bearings 102A and 102B for ensuring smooth rotation of the screw bolt 70, and bolt receivers 103A and 103B received therein. The opening 10B formed on the other end surface of the housing 10 is covered with a cover acting as the second cover means 12, as shown in Fig. 16.

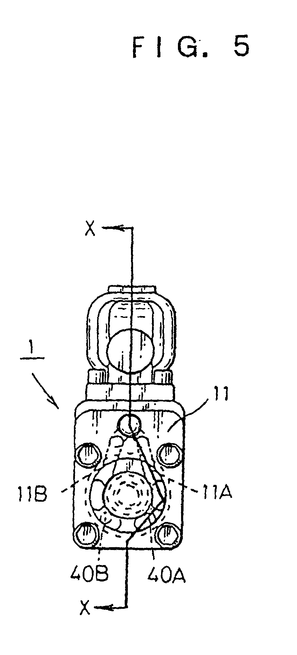

The first cover means or cap 11 is formed in an inner surface thereof with a pair of laterally arranged air passages 11A and 11B which cooperate with each other to constitute a part of an air flow path, as shown in Figs. 5, 6 and 8.

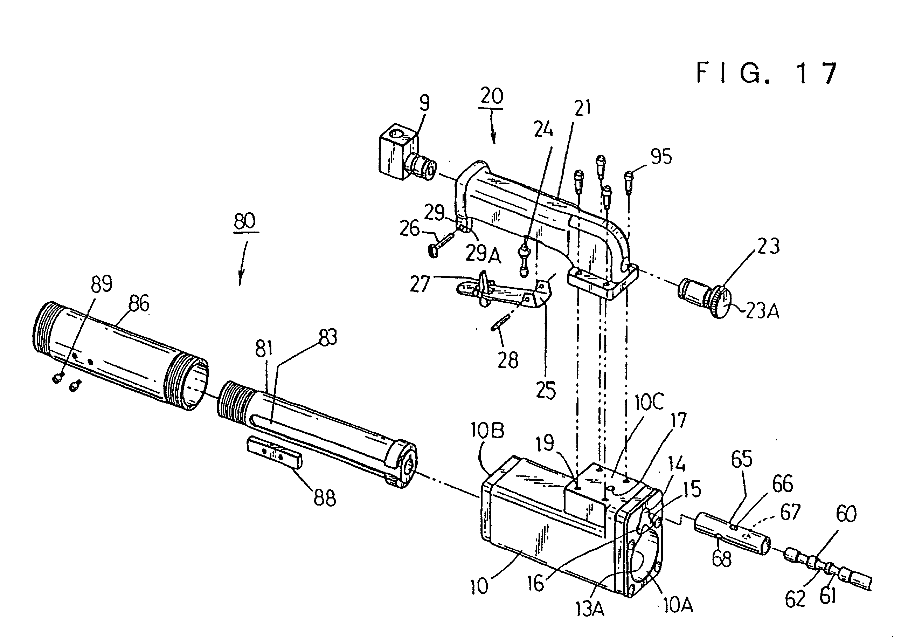

The housing 10, as shown in Fig. 17, is formed at a portion thereof positioned above the first receiving portion 13A with a cylindrical hole 14 so as to extend in a longitudinal or axial direction thereof, in which a bushing 65 is fitted. Also, the housing 10 is formed with a pair of air passages 15 and 16 so as to be positioned on both sides of the cylindrical hole 14. The air passage 15 is arranged so as to communicate with an air outlet hole 67 formed at a lower portion of the bushing 65 positioned on a rear right side thereof when the bushing 65 is fitted in the cylindrical hole 14 of the housing 10. The air passage 16 is adapted to communicate with an air outlet hole 68 formed at a lower portion of the bushing 65 on a front left side thereof when the fitting is made. Also, the air passages 15 and 16 of the housing 10 are arranged so as to communicate with the air passages 11A and 11B of the cap 11, respectively, when the cap 11 is mounted on the housing 10.

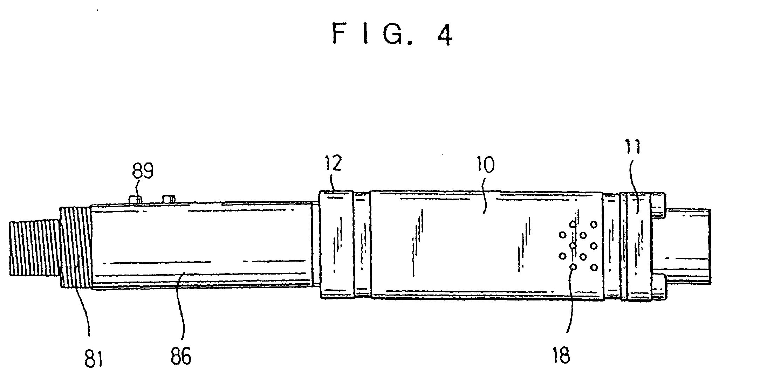

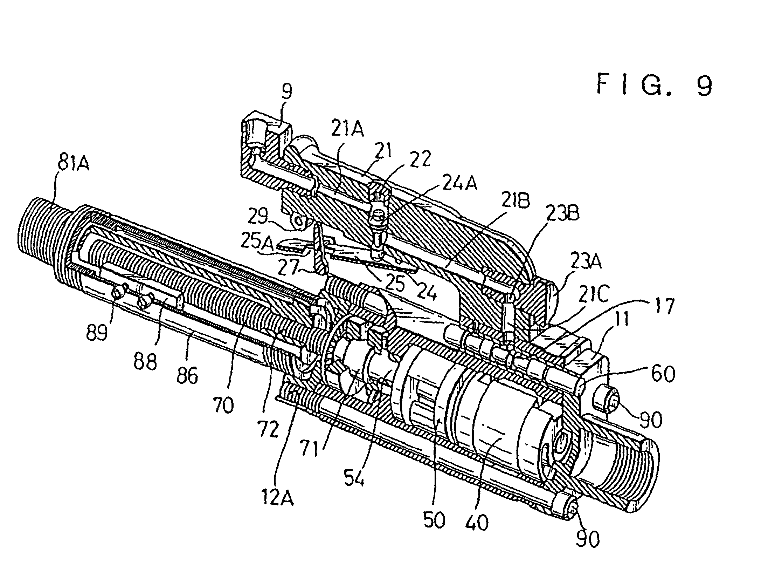

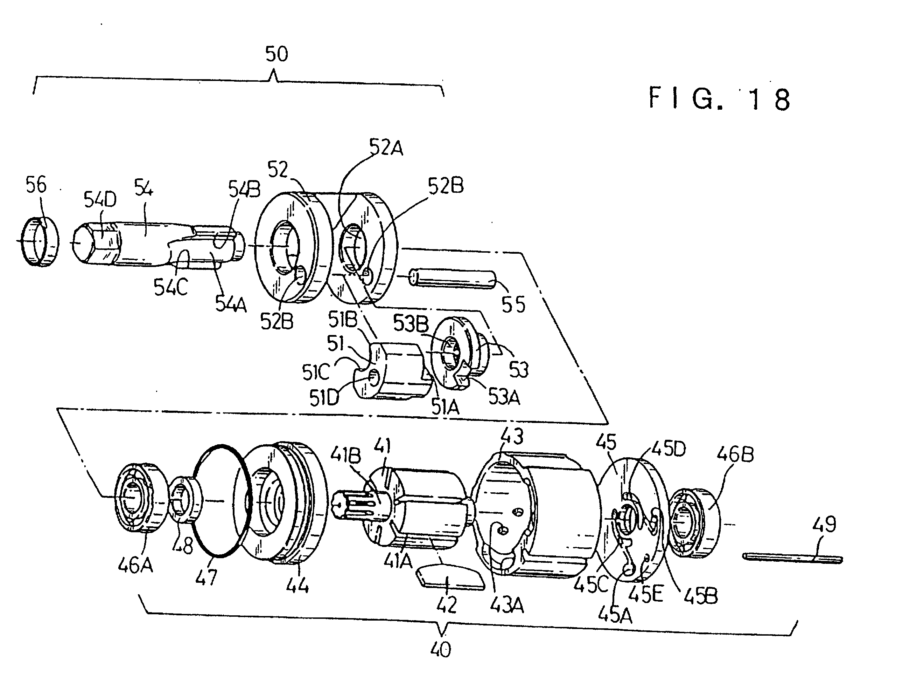

The air introduction means 20, as shown in Figs. 9 and 17, includes a handle 21, which is formed with an air introduction passage 21C. The housing 10 is provided on an upper surface thereof with a step 10C, which is formed at a central portion thereof with an air introduction hole 17 so as to communicate with the air introduction passage 21C of the handle 21 of the air introduction means 20 when the air introduction means 20 is connected to the housing 10 as described hereinafter. Also, the housing 10, as shown in Fig. 4, is formed on a bottom surface thereof with an exhaust hole 18 in correspondence to an air outlet holes 43A (Fig. 18) formed on a bottom of the cylinder 43, which will be described hereinafter.

The upper step 10C of the housing 10, as shown in Fig. 17, is formed at corners thereof with threaded holes 19. The handle 21 of the air introduction means 20 is placed on the step 10C of the housing 10 and then fixed thereon by threadedly inserting bolts 95 into the threaded holes 19 while ensuring airtight connection therebetween.

The air introduction means 20 includes the above-described handle 21, an air regulator 23 arranged on a proximal end of the handle 21, an air valve 24 arranged on a central portion of a bottom surface of the handle 21, a switch lever 25 disposed on the bottom surface of the handle 21 so as to operate the air valve 24, a control pin 26 for selectively restraining or controlling movement of the switch lever 25, and a stopper 27 pivotally supported in a cutout 25A (Figs. 1 and 9) formed at a free end of the switch lever 25 so as to be raised therein. The air valve 24 is rendered open by moving or pulling the switch lever 25 toward the bottom surface of the handle 21. Control or regulation of movement of the switch lever 25 by the control pin 26 is carried out in order to maintain the thus-established open state of the air valve 24. Reference numeral 9 designates a connector which is connected to the free end of the handle 21 and through which an air hose is connected to the handle 21.

The handle 21 is formed therein with the air introduction passage 21C, as well as air introduction passages 21A and 21B, through which compressed air is introduced into the housing 10, as shown in Figs. 9 to 11.

The air regulator 23 includes a knob 23A rotatably attached thereto and is formed therein with a flow control hole 23B (Fig. 9). The air regulator 23 is so constructed that rotation of the knob 23A varies a degree of threaded engagement between the air. regulator 23 and the housing 21, to thereby adjust a degree of opening of the flow control hole 23B, resulting in controlling a flow rate of compressed air which flows through the air introduction passage 21C.

The air valve 24 includes a valve body 24A (Fig. 9), which is disposed in a valve chest 22 arranged between the air introduction passages 21A and 21B. In the air valve 24 thus constructed, when the switch lever 25 is operated to upwardly push a lower end of the air valve 24 while abuttedly contacting it with an upper surface of the switch lever 25, the valve body 24A of the air valve 24 is raised from a valve seat in the valve chest 22, resulting in the air valve 24 being open, so that the air introduction passages 21A, 21B and 21C may be permitted to communicate with each other, to thereby permit compressed air introduced into the handle to flow into the housing 10 through the air introduction hole 17 (Figs. 9 and 17) formed at the step 10C of the upper surface of the housing 10. Then, when the switch lever 25 is returned to its original position as shown in Figs. 1 to 3, the valve body 24A of the air valve 24 is closed, to thereby isolate the air introduction passages 21A and 21B from each other, resulting in preventing flowing of compressed air from the air introduction passage 21A to the air introduction passage 21B.

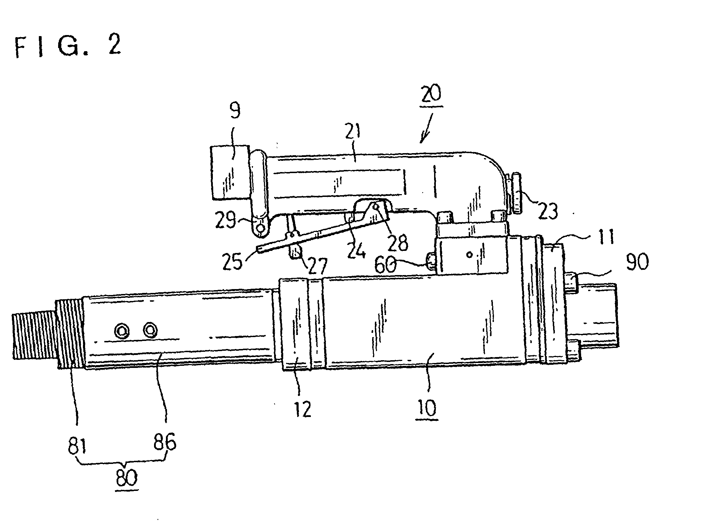

The switch lever 25 is pivotally supported at a proximal end thereof on a short pin 28 inserted through insertion holes formed at a central portion of the handle 21 positioned on a bottom side thereof, as shown in Fig. 2.

The control pin 26 is inserted through pin insertion holes 29A (Figs. I and 17) formed via a pair of projections 29 provided on a lower surface of the free end of the handle 21 so as to downwardly extend therefrom, to thereby control or regulate movement of the switch lever 25 raised.

The impact wrench mechanism 30 includes the above-described air motor 40 driven by compressed air fed into the housing 10, as well as an impact wrench 50 actuated by the air motor 40.

The air motor 40, as shown in Fig. 18, includes a rotor 41, blades 42 each detachably held in each of slits 41A formed on the rotor 41, a cylinder 43 having the rotor 41 and blades 42 arranged therein, a front plate 44 and a rear plate 45 which cooperate with each other to hold the rotor 41 thereon, a front bearing holder 46A and a rear bearing holder 46B acting to ensure smooth rotation of the rotor 41, an O-ring 47 for preventing air leakage, and an oil seal 48.

The rotor 41 includes a rotor shaft 41B, which is engagedly fitted in a central hole 53B of a cam 53 constituting the impact wrench 50.

The rear plate 45 of the air motor 40 is formed with a pair of air inlet holes 45A and 45B. Also, the rear plate 45 is formed at a portion thereof positioned above the air inlet hole 45A with an air inflow groove 45C. The air inflow groove 45C is arranged so as to start at the air inlet hole 45A, to thereby permit compressed air to be fed through the air inflow groove 45C toward the rotor 41. Also, the rear plate 45 is formed at a portion thereof above the air inlet hole 45B with an air inflow groove 45D, which is arranged so as to start at the air inlet hole 45B, so that compressed air for reverse rotation of the rotor 41 may be fed through the air inflow groove 45D toward the rotor 41.

The rear plate 45 and front plate 44 are connected to each other through a pin 49 inserted via a through-hole 45E of the rear plate 45.

The impact wrench 50, as shown in Fig. 18, includes a hammer 51, a hammer frame 52, a spindle 54 (impact output shaft) for transmitting rotation of the air motor 40 to the screw bolt 70, a cam 53 for transmitting rotation of the rotor 41 to the hammer 51, hammer frame 52 and spindle 54, and a hammer pin 55 constituting a shaft body of the hammer 51. The hammer 51 is provided with a projection 51A and correspondingly the cam 53 is formed with a cutout 53A, so that the projection 51A of the hammer 51 may be loosely fitted in the cutout 53A of the cam 53.

The hammer 51 includes outer peripheral end surfaces 51B and 51C. The spindle 54 is formed with a recess 54A, which includes holding surfaces 54B and 54C. The hammer 51 is so constructed that the outer peripheral end surface 51B may be held on the holding surface 54B of the recess 54A when the hammer 51 is rotated together with the hammer frame 52 in a counterclockwise direction. Also, when the hammer 51 is rotated together with the hammer frame 52 in a clockwise direction, the outer peripheral end surface 51C of the hammer 51 may be held on the holding surface 54C of the spindle 54. Also, the spindle 54 includes a distal end 54D and is engaged at the distal end 54C with the bolt head 71 of the screw bolt 70.

The hammer frame 52 *is* formed at a center thereof with an insertion hole 52A, through which the rotor shaft 41B is inserted. Also, the hammer frame 52 is formed with a bearing hole 52B at a portion thereof deviated toward an outer periphery thereof from the insertion hole 52A. In addition, the hammer 51 is formed with a through-hole 51D. The hammer 51 is arranged so as to be inserted through the bearing hole 52B and the through-hole 51D of the hammer 51 and then supported on the hammer frame 52. Such construction permits the hammer 51 to be actuated about the hammer pin 55. In Fig. 18, reference numeral 56 designates a collar.

When any load is initially kept from being applied to a distal end of the piston 81 irrespective of driving of the air motor 40, the hammer 51, hammer frame 52, spindle 54 and screw bolt 70 are integrally rotated, so that the piston 81 may be retractably moved with respect to the cylinder 86 or advanced or retracted with respect to the cylinder 86.

Then, when such movement of the piston 81 is further carried out to start application of the load to the piston 81, so that further turning force is required to actuate the screw bolt 70, the cam 53 supported on the rotor shaft 41B of the rotor 41 temporarily pushes the hammer 51 upwardly.

Thus, when the piston 81 is kept advancing from the cylinder 86, engagement between the holding surface 54B of the spindle 54 and the outer peripheral end surface 51B of the hammer 51 is released, so that the hammer 51 may be rotated once together with the hammer frame 52. During such one rotation, the hammer 51 is pushed down while being guided by movement of the cam 53. Then, after the one rotation, the outer peripheral end surface 51B of the hammer 51 is caused to be held on the holding surface 54B of the spindle 54. Thus, shock is applied to the spindle 54, to thereby rotate the screw bolt, leading to further advancing of the piston 81. When the piston 81 is retracted, engagement between the holding surface 54C of the spindle 54 and the outer peripheral end surface 51C of the hammer 51 is released, so that the hammer 51 may be rotated once together with the hammer frame 52. During such one rotation, the hammer 51 is pushed down while being guided by movement of the cam 53. Then, when the one rotation is completed, the outer peripheral surface 51C of the hammer 51 is held on the holding surface 54C of the spindle 54 again. Thus, shock is applied to the spindle 54, resulting in the screw bolt 70 being rotated, leading to further retraction of the piston 81.

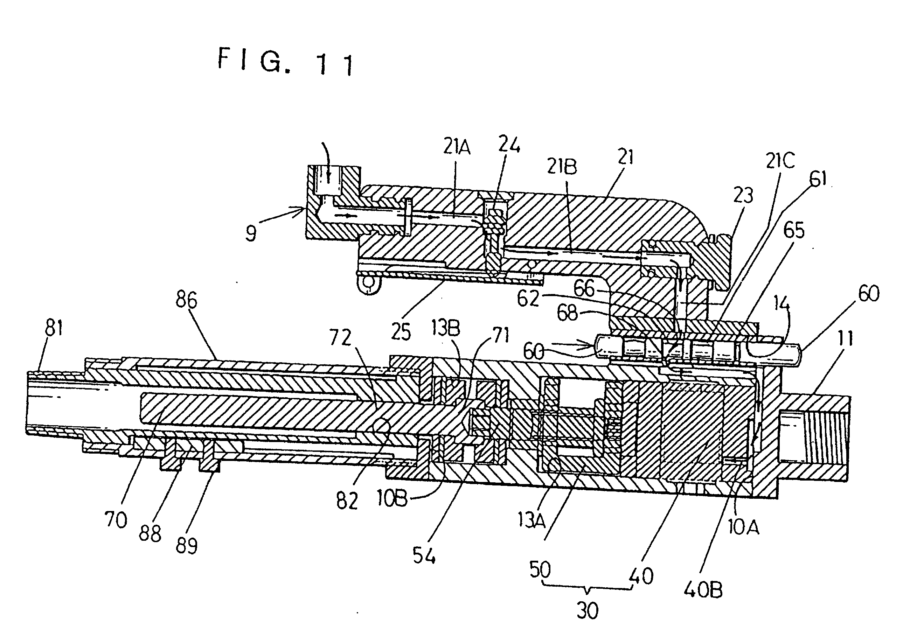

The rotation direction changing-over valve 60 is received at a large part thereof in the bushing 65 while exhibiting a satisfactory changing-over function, as shown in Figs. 10 and 11. Also, the rotation direction changing-over valve 60 is arranged while keeping both ends thereof projected from the bushing 65.

The rotation direction changing-over valve 60 thus constructed functions to change over the air flow path of compressed air introduced through the air introduction means 20 to change a direction of rotation of the air motor 40 constituting the impact wrench mechanism 30.

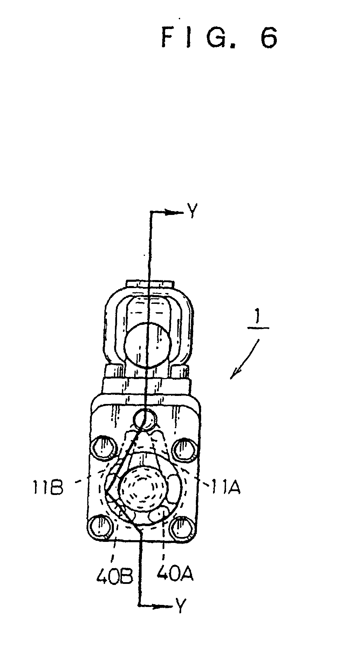

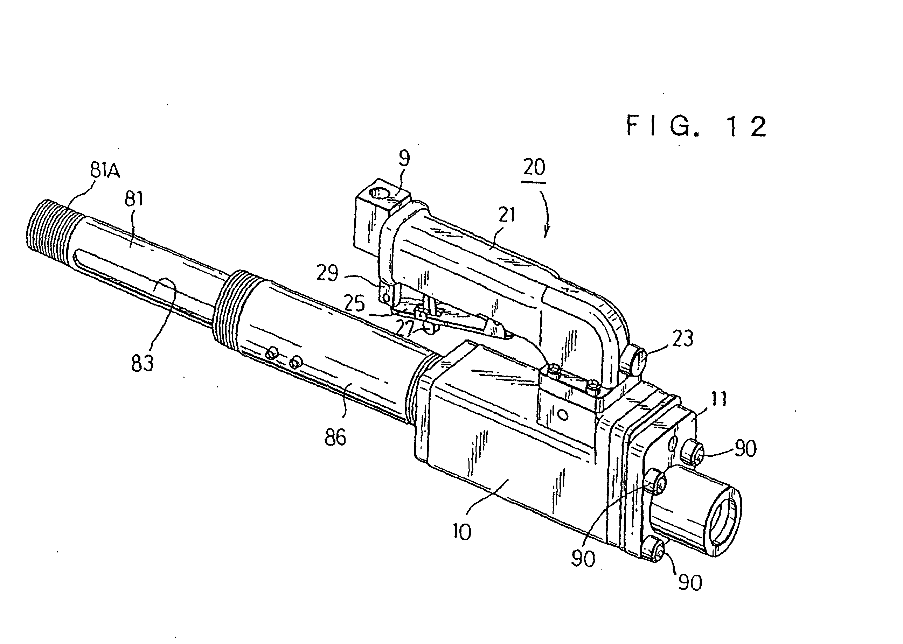

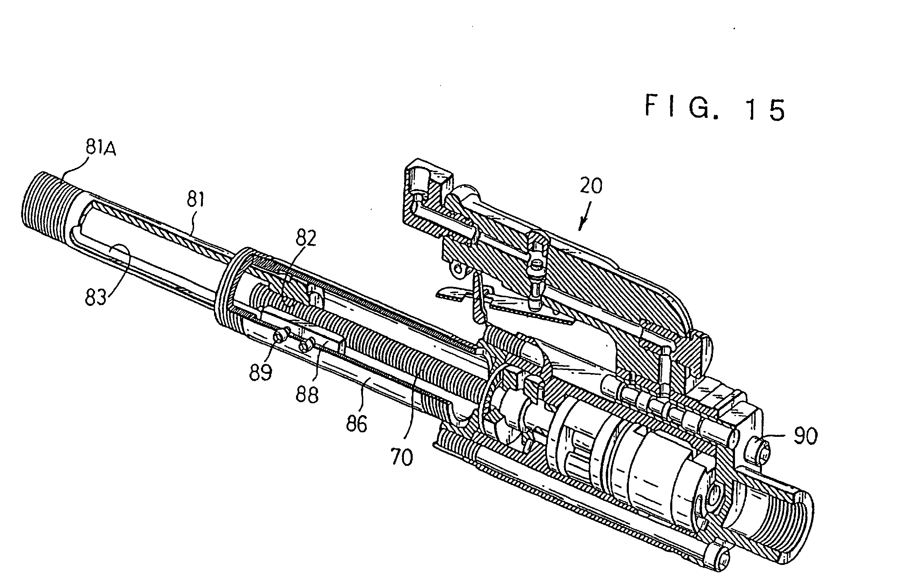

For this purpose, the rotation direction changing-over valve 60 is formed with two grooves 61 and 62, as shown in Figs. 10, 11 and 17. The grooves 61 and 62 contribute to changing-over of air passages formed in the housing (or first and second air passages described hereinafter). More particularly, forcing of the rotation direction changing-over valve 60 in a forward direction as shown in Fig. 10 permits air to flow through the groove 61 positioned rearwardly of the bushing 65 and the air inlet hole 45A of the rear plate 45 (Fig. 18) to an air inlet port 40A of the air motor 40 (Figs. 5 and 6), resulting in the air motor 40 being rotated in a counterclockwise direction or left-hand direction. This permits the spindle 54 of the impact wrench 50 to be likewise rotated in the counterclockwise direction, leading to rotation of the screw bolt 70. This results in the piston 81 outwardly advancing from the cylinder 86 or transferring from a state shown in Figs. 1, 9 and 10 to that shown in Figs. 12 and 15.

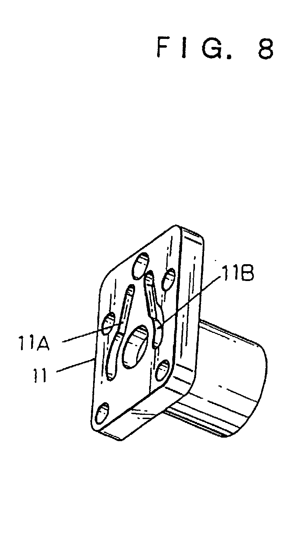

To the contrary, when the rotation direction changing-over valve 60 is pushed rearwardly as shown in Fig. 11, air is permitted to flow to the forward groove 62 of the bushing 65. Then, the air enters an air inlet port 40B (Figs. 5 and 6) of the air motor 40 through the air passage 11B (Fig. 8) of the cap 11 and the air inlet hole 45B (Fig. 18) of the rear plate 45, leading to rotation of the air motor 40 in the clockwise direction or right-hand direction. This permits the spindle 54 of the impact wrench 50 to be likewise rotated in the clockwise direction, to thereby rotate the screw bolt 70. This results in the piston 81 being retracted into the cylinder 86 or transferred from a state shown in Figs. 12 and 15 to that shown in Figs. 1, 9 and 10.

The bushing 65 is formed at a substantially central portion of an upper surface thereof with an air inlet hole 66, at a lower portion thereof positioned on a rear right-hand side thereof with the air outlet hole 67 and at a lower portion thereof positioned on a front left-hand side thereof with the air outlet hole 68, as shown in Figs. 10 and 11. Such construction, when the rotation direction changing-over valve 60 is forwardly forced out, permits compressed air to flow through the air inlet hole 66, the groove 61 of the rotation direction changing-over valve 60 and the air outlet hole 67 and then be guided through the air passage 11A of the cap 11 toward the air inlet port 40A of the air motor 40 as shown in Figs. 5 and 10.

When the rotation direction changing-over valve 60 is kept forwardly forced out, compressed air is guided through the air outlet hole 68, the groove 62 of the rotation direction changing-over valve 60, the air outlet hole 68 and the air passage 11B of the cap 11 toward the air inlet port 40B of the motor 40 as shown in Figs. 6 and 11.

Thus, in the housing 10, the air introduction hole 17, air inlet hole 66, air outlet hole 67, air passage 15, air passage 11A, air inlet hole 45A and air inflow groove 45C cooperate with each other to constitute a first air flow path. Likewise, the air introduction hole 17, air inlet hole 66, air outlet hole 68, air passage 16, air passage 11B, air inlet hole 45B and air inflow groove 45D cooperate together to provide a second air flow path.

The screw bolt 70, as described above, has revolving force applied thereto from the impact wrench mechanism 30. This results in a receiving portion formed on the bolt head 71 of the screw bolt 70 being engaged with the spindle 54 of the impact wrench 50 constituting the impact wrench mechanism 30.

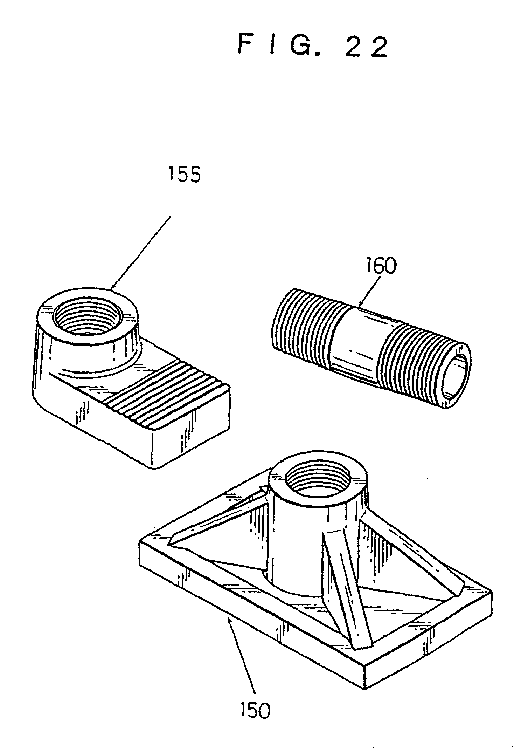

In the illustrated embodiment, the piston mechanism 80 is constituted by the piston 81, the cylinder 86 and a piston guide member 88. The piston 81 is constructed into a cylindrical structure, resulting in being formed therein with a central hole which extends in an axial direction thereof. An inner surface of the piston 81 which defines the central hole of the piston 81 is formed with threads, which are threadedly engaged with threads 72 of the screw bolt 70. Also, the piston 81 is formed on an outer peripheral surface thereof with an elongated guide groove 83 so as to extend in a longitudinal direction thereof, as shown in Fig. 12. Further, the piston 81 is formed on a portion of the outer peripheral surface thereof positioned on a free end side thereof with a threads 81A, on which an attachment 155 (Fig. 22) is threadedly fitted.

The cylinder 86 and piston guide member 88 cooperate with each other to prevent rotation of the piston 81, to thereby ensure smooth reciprocation of the piston 81. The cylinder 86 acts to guide the piston 81 therein during reciprocation of the piston 81 therein. The piston guide member 88 is fixedly mounted on an inner peripheral surface of the cylinder 86 by means of screws 89 as shown in Fig. 15.

The first cover means or cap 11, housing 10 and second cover means or cover 12 are integrally connected to each other by means of the four holding bolts 90 inserted through the corners of the housing 10. This results in the holding bolts 90 each being threadedly fitted at a distal end thereof in a threaded portion 12A of the second cover means 12, as shown in Fig. 9.

Compressed air is fed to the automobile sheet metal surface correcting equipment 1 from a compressor 210 connected thereto through a connector 9 and an air hose 230. When the air valve 24 is kept closed, such feeding of compressed air permits the air to reach the air passage 21A in the handle 21. At this time, when the switch lever 25 is raised, the air passages 21A, 21B and 21C are permitted to communicate with each other, resulting in the air flowing into the housing 10 through the air introduction hole 17 of the housing 10. In this instance, when the rotation direction changing-over valve 60 is kept forced in the right-hand direction as shown in Fig. 10, the air is permitted to flow through the groove 61 of the rotation direction changing-over valve 60, the air passage 11A of the cap 11 and the air inlet hole 45A of the rear plate 45 of the air motor 40, to thereby abut against the blades 42, so that the rotor 41 may be rotated in the counterclockwise direction, leading to advancing of the piston 81.

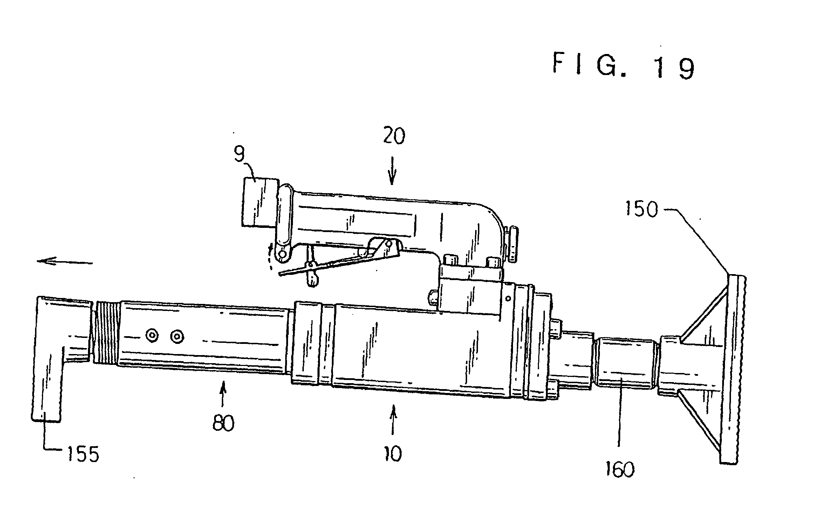

Now, the manner of operation of the thus-constructed automobile sheet metal surface correcting equipment 1 of the illustrated embodiment will be described hereinafter with reference to Figs. 19 to 21 in connection with correction or removal of an inward projection 250 generated on a quarter panel of a trunk room 201 of an automobile 200 by an accident or the like by way of example.

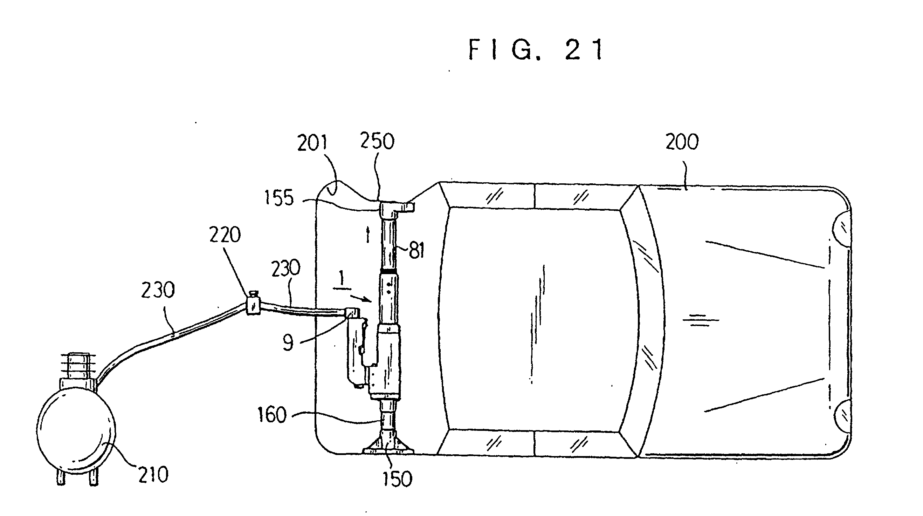

An attachment 150, the attachment 155 or an attachment 160 (Fig. 22) is attached to the sheet metal surface correcting equipment 1 as required. Then, the compressor 210 and sheet metal correcting equipment 1 are connected to each other through the connector 9 and air hose 230, as shown in Fig. 21. Subsequently, the attachment 155 is applied to the projection 250 to be connected, as shown in Fig. 21. Thereafter, the lever switch 25 is operated to advance the piston 81, to thereby correct the projection 250.

In this instance, the above-described operation may be roughly carried out to set the sheet metal correcting equipment 1 on the sheet metal surface or the projection 250 so as to prevent the equipment 1 from being detached from the projection 250. Then, an air ON/OFF switch 220 arranged at an intermediate portion of the air hose 230 may be turned off once and the switch lever 26 may be held by the stopper pin 26 while keeping the switch lever 25 raised. Thereafter, the air ON/OFF switch 220 may be turned on for remote control.

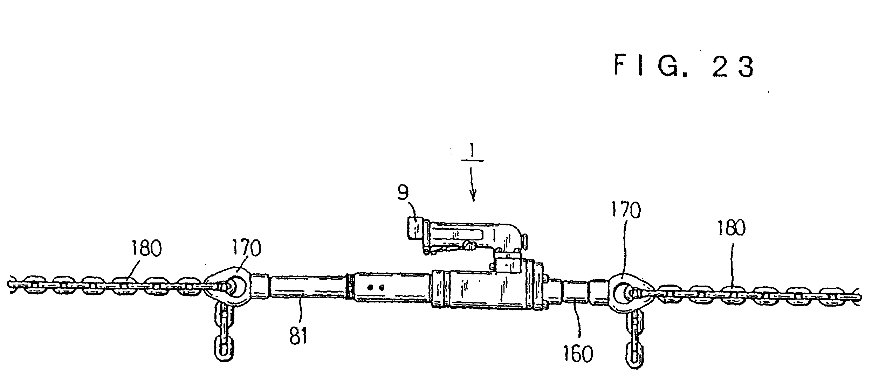

Now, operation of pulling a recess 251 on a door panel 202 of the automobile 200 to flatten it will be described with reference to Figs. 23 to 26.

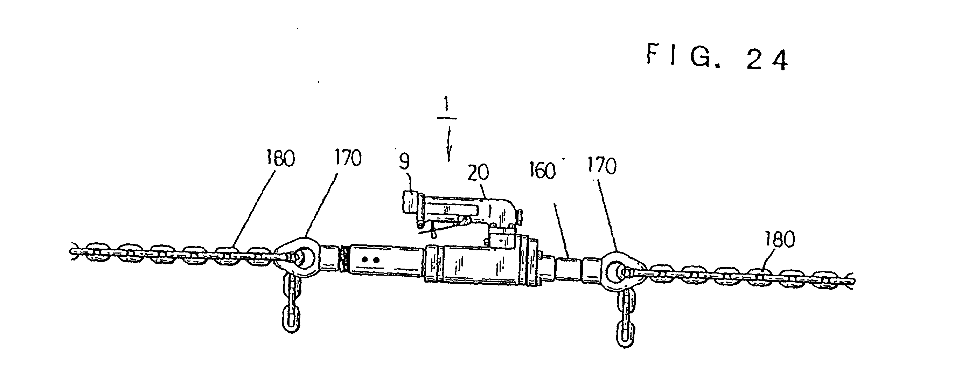

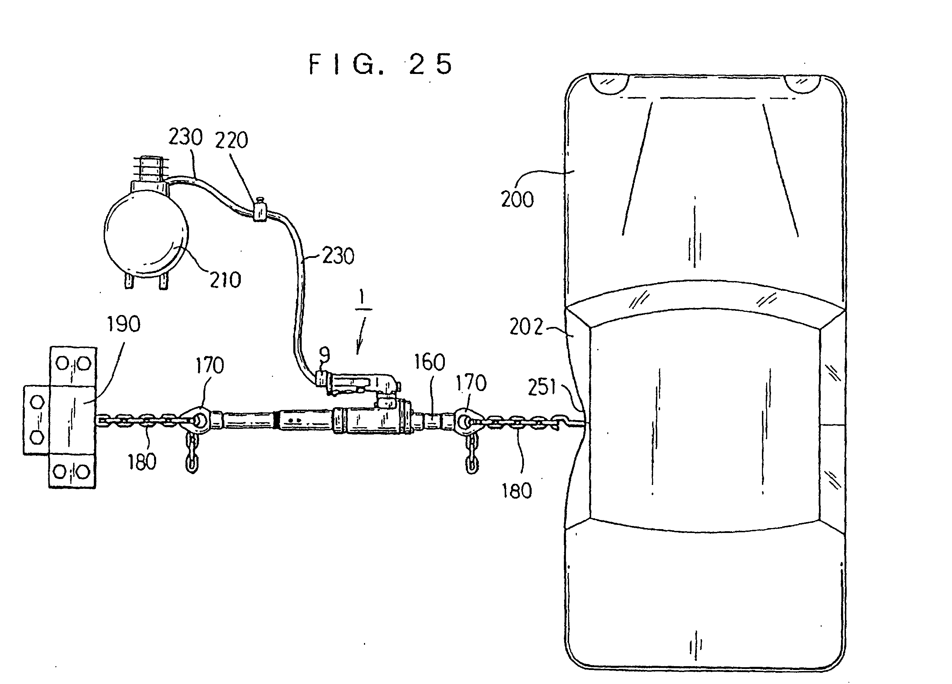

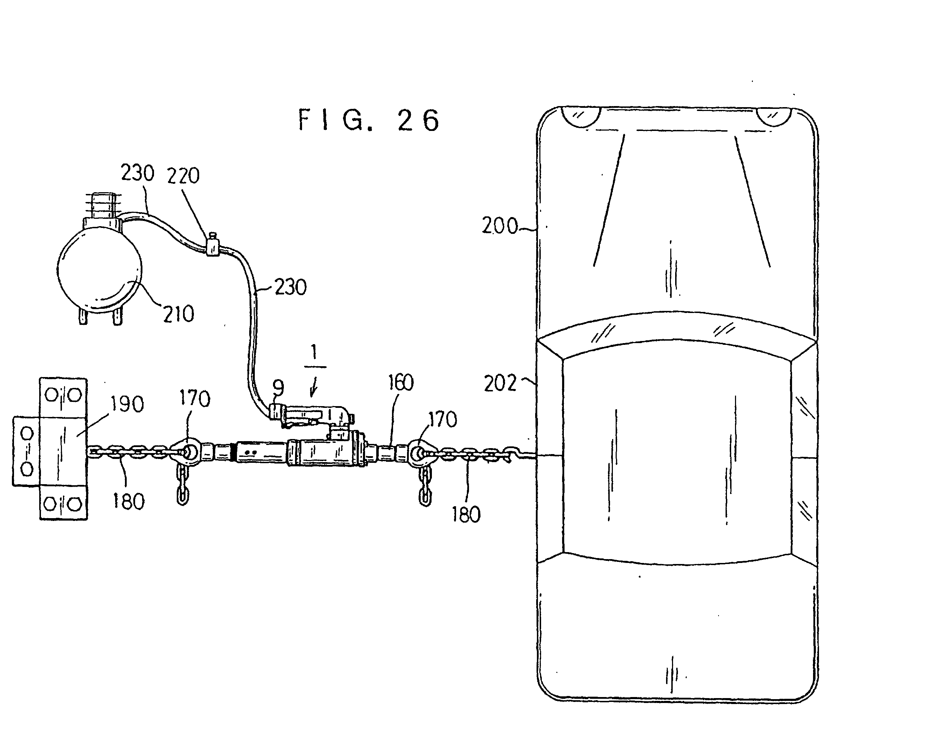

First, the compressor 210 and automobile sheet metal correcting equipment 1 are connected to each other through the connector 9 and air hose 230. Then, the air ON/OFF switch 220 is operated to set the piston at a projected or advanced state, as shown in Fig. 23. Thereafter, a first chain 180 is attached to the sheet metal correcting equipment 1 through the attachment 160 and an attachment 170, as shown in Figs. 23 and 24. Then, a second chain 180 is connected at a distal end to a support 190 and the first chain 180 is connected at a distal end thereof to a side of the door panel 202 as shown in Fig. 25. Subsequently, the air ON/OFF switch 220 is operated to retract the piston 81 into the cylinder, to thereby draw out the recess 251, leading to correction of the recess 251. The sheet metal correcting equipment 1 is transferred from a state shown in Fig. 25 to that of Fig. 26.

As can be seen form the foregoing, the automobile sheet metal correcting equipment of the present invention exhibits many advantages.

More particularly, the automobile sheet metal surface correcting equipment of the present invention facilitates satisfactory sheet metal working because of solely selectively carrying out pushing and pulling of a sheet metal surface depending on properties of the sheet metal surface.

Also, the automobile sheet metal surface correcting equipment of the present invention satisfactorily prevents contamination of an automobile during sheet metal working.

Another advantage of the present invention is that correction of a site or portion of a sheet metal surface to be corrected is facilitated even when the portion requires that alignment between the piston and the portion of the surface is carried out from an inside of the sheet metal as seen in a bonnet, a trunk room or the like, because the air hose for connecting the compressed air feed means and the sheet metal surface correcting equipment to each other there through can be separated from the latter in the course of advancing or retracting of the piston.

Further, the automobile sheet metal surface correcting equipment of the present invention permits only one worker to rapidly carry out both operation of positioning the distal end of the piston on a portion of a sheet metal surface to be corrected and operation of advancing or retracting the piston, because the piston mechanism is actuated by merely operating the switch lever.

In addition, the automobile sheet metal surface correcting equipment of the present invention is so constructed that the holding bolts connect the covering means to both open ends of the housing to close the ends. Such construction permits the equipment to adequately withstand a load during sheet metal drawing operation which is apt to readily cause a load to be applied to a housing of the equipment. Also, it permits the automobile sheet metal surface correcting equipment to be portable.

Moreover, the automobile sheet metal surface correcting equipment of the present invention facilitates sheet metal operation or working because advancing or retracting the piston can be carried out by one-tough operation.

While a preferred embodiment of the invention has been described with a certain degree of particularity with reference to the drawings, obvious modifications and variations are possible in light of the above teachings within the scope of the appended claims.

## Claims

1. An automobile sheet metal surface correcting equipment comprising:
a housing (10);
a piston mechanism (80) including a cylinder (86) and a piston (81)
**characterised by**:
said housing having an air flow path means (60) switchably arranged therein;
an air introduction means (20) provided therein with air introduction passages (21A, 21B, 21C) for introducing compressed air into said housing therethrough;
an impact wrench mechanism (30) arranged in said housing and actuated by means of compressed air fed through said air introduction means into said housing;
a screw bolt (70) having rotating force applied thereto from said impact wrench mechanism; and by said piston being
movably arranged in said cylinder in a retractable manner in association with rotation of said screw bolt;
whereby said air flow path means in said housing is changed over to retractablymove said piston of said piston mechanism, resulting in correcting a metal sheet surface.

2. An automobile sheet metal surface correcting equipment as defined in claim 1, **characterized in that** said impact wrench mechanism includes an air motor (40) actuated by means of compressed air fed into said housing and an impact wrench (50) actuated by said air motor;
a rotation direction changing-over valve (60) is arranged for changing over said air flow path means, to thereby change over a direction of rotation of said air motor of said impact wrench mechanism; and
said air flow path means includes a first air flow path (17, 66, 67, 15, 11A, 45A, 45C) and a second air flow path (17, 66, 68, 16, 11B, 45B, 45D) which are changed over by said rotation direction changing-over valve which are changed over by said rotation direction changing-over valve;
whereby a direction of rotation of said air motor is changed over to actuate said piston of said piston mechanism, to thereby correct the sheet metal surface.

3. An automobile sheet metal surface correcting equipment as defined in claim 1, **characterized in that** holding bolts (90) are arranged for mounting cover means (11, 12) on end surfaces of said housing to close said end surfaces;
whereby said air flow path means in said housing is changed over during actuation of said impact wrench mechanism to actuate said piston of said piston mechanism, resulting in correcting the sheet metal surface.

4. An automobile sheet metal surface correcting equipment as defined in claim 2, **characterized in that** holding bolts (90) are arranged for mounting cover means (11, 12) on end surfaces of said housing to close said end surfaces;
whereby a direction of rotation of said air motor is changed over to actuate said piston of said piston mechanism, to thereby correct the sheet metal surface.

5. An automobile sheet metal surface correcting equipment as defined in any one of claims 1 to 4, **characterized in that** said air introduction means includes a handle (21) having said air introduction passages formed therein; and
said handle is arranged above said housing.

6. An automobile sheet metal surface correcting equipment as defined in any one of claims 1 to 4, **characterized in that** said housing includes a first receiving portion (13A) and a second receiving portion (13B);
said first receiving portion has said impact wrench mechanism received therein;
said screw bolt 70 includes a bolt head 71;
said second receiving portion has said bolt head of said screw bolt received therein;
said housing has a first opening (10A) formed on one of said end surfaces thereof and a second opening (10B) formed on the other of said end surfaces thereof; and
said first opening is closed with a first cover means (11) and said second opening being closed with a second cover means (12).

7. An automobile sheet metal surface correcting equipment as defined in claim 6, **characterized in that** said first cover means is formed on an inner surface thereof with a pair of air passages (11A, 11B) constituting a part of said air flow path means.

8. An automobile sheet metal surface correcting equipment as defined in claim 6, **characterized in that** said housing has a cylindrical hole (14) formed above said first receiving portion to fit a bushing (65) therein;
said bushing is formed at a lower portion thereof on a rear right side thereof with a first air outlet hole (67) and at a lower portion thereof on a front left side thereof with a second air outlet hole (68);
said housing has two air passages (15, 16) formed on both sides of said cylindrical hole (14);
one (15) of said air passages is arranged so as to communicate with one air passage (11A) of said first cover means and said first air outlet hole of said bushing; and
the other (16) of said air passage is arranged so as to communicate with the other air passage (11B) of said first cover means and said second air outlet hole of said bushing.

9. An automobile sheet metal surface correcting equipment as defined in claim 6, **characterized in that** said housing has a step (10C) formed on an upper surface thereof;
said air introduction means includes a handle (21) formed with said air introduction passage (21C); and
said step of said housing is formed with an air introduction hole (17) so as to communicate with said air introduction passage of said handle.

10. An automobile sheet metal surface correcting equipment as defined in claim 9, **characterized in that** said step of said housing is formed at corners thereof with threaded holes (19); and
said handle is airtightly fixed at a proximal end thereof on said step of said housing by means of bolts.

11. An automobile sheet metal surface correcting equipment as defined in any one of claims 1 to 5, **characterized in that** said air introduction means includes a handle (21), an air regulator (23) arranged on a proximal end of said handle, an air valve (24) arranged on a central portion of a bottom surface of said handle, a switch lever (25) disposed so as to operate said air valve, a control pin (26) for selectively controlling movement of said switch lever, and a stopper (27) pivotally supported in a cutout (25A) formed at a free end of said switch lever so as to be raised therein;
said air valve is rendered open by operating said switch lever toward said bottom surface of said handle; and
control of movement of said switch lever by said control pin is carried out in order to maintain such an open state of said air valve.

12. An automobile sheet metal surface correcting equipment as defined in claim 11, **characterized in that** said air valve includes a valve body (24A);
said valve body is disposed in a valve chest (22) arranged between said air introduction passages (21A) and (21B); and
said valve body of said air valve, when said switch lever is operated to upwardly push a lower end of said air valve while abuttedly contacting it with an upper surface of said switch lever, is raised from a valve seat arranged in said valve chest, resulting in said air valve being rendered open, so that said air introduction passages may be permitted to communicate with each other, to thereby permit compressed air introduced to flow into said housing through said air introduction hole formed on said upper surface of said housing.

13. An automobile sheet metal surface correcting equipment as defined in claim 8, wherein said rotation direction changing-over valve is projected at both ends thereof from said bushing.

14. An automobile sheet metal surface correcting equipment as defined in any one of claims 1 to 5, **characterized in that** said piston mechanism includes said piston, said cylinder and a piston guide member (88);
said piston is constructed into a hollow structure, resulting in being provided therein with a central hole so as to extend in a longitudinal direction thereof;
said central hole of said piston is formed with female threads (82) with which male threads (72) of said screw bolt (70) are threadedly engaged;
said piston is formed on an outer peripheral surface thereof with an elongated guide groove (83) for guiding said piston guide member; and
said guide groove is arranged so as to extend in the longitudinal direction of said piston.

15. An automobile sheet metal surface correcting equipment as defined in claim 3 or 4, **characterized in that** said first cover means, housing and second cover means are integrally connected to each other by means said holding bolts inserted through corners of said housing; and
said holding bolts each are threadedly engaged at a distal end thereof with each of the female screws (12A) formed in said second cover member.

## Patentansprüche

1. Vorrichtung bzw. Ausstattung zur Korrektur von Automobil-Blechoberflächen, mit:
einem Gehäuse (10); und einem Kolbenmechanismus (80), der einen Zylinder (86) und
einen Kolben (81) umfasst, **dadurch gekennzeichnet, dass** das Gehäuse eine Luftstrombahn-Einrichtung (60) aufweist, die verschiebbar bzw. schaltbar darin angeordnet ist;
durch eine Lufteinbringeinrichtung (20), die darin vorgesehen ist, mit Lufteinbringpassagen (21A, 21B, 21C) zum Einbringen komprimierter Luft in das Gehäuse durch diese hindurch;
durch einen Schlagschraubermechanismus (30), der in dem Gehäuse angeordnet ist und mittels komprimierter Luft betätigt wird, die durch die Lufteinbringeinrichtung in das Gehäuse zugeführt wird;
durch einen Schraubenbolzen (70), auf den eine Drehkraft von dem Schlagschraubermechanismus aufgebracht wird, und dadurch, dass
der Kolben beweglich in dem Zylinder in zurückziehbarer Weise in Zuordnung mit einer Drehung des Schraubenbolzens angeordnet ist;
wodurch die Luftstrombahneinrichtung in dem Gehäuse so verändert wird, dass sie den Kolben des Kolbenmechanismus zurückziehend bewegt, was in der Korrektur einer Metallblechoberfläche resultiert.

2. Vorrichtung bzw. Ausstattung zur Korrektur von Automobilblechoberflächen nach Anspruch 1, **dadurch gekennzeichnet, dass** der Schlagschraubermechanismus einen Luftmotor (40) umfasst, der mittels komprimierter Luft tätig wird, welche in das Gehäuse zugeführt wird, und einen Schlagschrauber (50), der durch den Motor betätigt wird; und dass ein Drehrichtungs-Veränderungsventil (60) angeordnet ist, um die Luftstrombahneinrichtung zu verändern, um dadurch eine Richtung der Drehung des Luftmotors des Schlagschraubermechanismus zu verändern; und dass
die Luftstrombahneinrichtung eine erste Luftstrombahn (17, 66, 67, 15, 11A, 45A, 45C) und eine zweite Luftstrombahn (17, 66, 68, 16, 11B, 45B, 45D) umfasst, welche durch das Drehrichtungs-Veränderungsventil verändert werden;
wobei eine Drehrichtung des Luftmotors verändert wird, um den Kolben des Kolbenmechanismus zu betätigen, um dadurch die Blechoberfläche zu korrigieren.

3. Vorrichtung bzw. Ausstattung zur Korrektur von Automobilblechoberflächen nach Anspruch 1, **dadurch gekennzeichnet, dass** Haltebolzen (90) angeordnet sind, um Abdeckeinrichtungen (11, 12) an Stirnoberflächen des Gehäuses zu befestigen, um die Stirnoberflächen abzuschließen,
wodurch die Luftstrombahneinrichtung in dem Gehäuse während der Betätigung des Schlagschraubermechanismus verändert wird, um den Kolben des Kolbenmechanismus zu betätigen, was in einer Korrektur der Metallblechoberfläche resultiert.

4. Vorrichtung bzw. Ausstattung zur Korrektur von Automobilblechoberflächen nach Anspruch 2, **dadurch gekennzeichnet, dass** Haltebolzen (90) angeordnet sind, um Abdeckeinrichtungen (11, 12) an Stirnflächen des Gehäuses zu befestigen, um die Stirnflächen abzuschließen;
wodurch eine Drehrichtung des Luftmotors verändert wird, um den Kolben des Kolbenmechanismus zu betätigen um dadurch die Metallblechoberfläche zu korrigieren.

5. Vorrichtung bzw. Ausstattung zur Korrektur von Automobilblechoberflächen nach einem der Ansprüche 1 bis 4, **dadurch gekennzeichnet, dass** die Lufteinbringeinrichtung einen Handgriff (21) umfasst, in dem die Lufteinbringpassagen ausgebildet sind; und dass
der Handgriff oberhalb des Gehäuses angeordnet ist.

6. Vorrichtung bzw. Ausstattung zur Korrektur von Automobilblechoberflächen nach einem der Ansprüche 1 bis 4, **dadurch gekennzeichnet, dass** das Gehäuse einen ersten Aufnahmeabschnitt (13A) und einen zweiten Aufnahmeabschnitt (13B) umfasst;
wobei der erste Aufnahmeabschnitt den Schlagschraubermechanismus darin aufnimmt;
wobei der Schraubenbolzen (70) einen Bolzenkopf (71) umfasst;
wobei der zweite Aufnahmeabschnitt den Bolzenkopf des Schraubenbolzens darin aufnimmt;
wobei das Gehäuse eine erste Öffnung (10A) aufweist, die an einer seiner Stirnoberflächen ausgebildet ist, und eine zweite Öffnung (10B), die an der anderen seiner Stirnflächen ausgebildet ist; und
wobei die erste Öffnung mit einer ersten Abdeckeinrichtung (11) geschlossen ist, und die zweite Öffnung mit einer zweiten Abdeckeinrichtung (12) geschlossen ist.

7. Vorrichtung bzw. Ausstattung zur Korrektur von Automobilblechoberflächen nach Anspruch 6, **dadurch gekennzeichnet, dass** die erste Abdeckeinrichtung an einer inneren Oberfläche davon ausgebildet ist, mit einem Paar Luftpassagen (11A, 11B), welche einen Teil der Luftstrombahneinrichtung ausbilden.

8. Vorrichtung bzw. Ausstattung zur Korrektur von Automobilblechoberflächen nach Anspruch 6, **dadurch gekennzeichnet, dass** das Gehäuse ein zylindrisches Loch (14) aufweist, das oberhalb des ersten Aufnahmeabschnittes ausgebildet ist, um eine Hülse (65) darin einzupassen;
wobei die Hülse an ihrem unteren Abschnitt und an ihren hinteren rechten Seite mit einem ersten Luftauslassloch (67) ausgebildet ist, und an ihrem unteren Abschnitt an ihrer vorderen linken Seite mit einem zweiten Luftauslassloch (68);
wobei das Gehäuse zwei Luftpassagen (15, 16) aufweist, die auf beiden Seiten des zylindrischen Loches (14) ausgebildet sind;
wobei eine (15) der Luftpassagen so angeordnet ist, dass sie mit einer Luftpassage (11A) der ersten Abdeckeinrichtung und dem zweiten Luftauslassloch der Hülse in Verbindung steht; und
wobei die andere (16) Luftpassage so angeordnet ist, dass sie mit der anderen Luftpassage (11B) der ersten Abdeckeinrichtung und dem zweiten Luftauslassloch der Hülse in Verbindung steht.

9. Vorrichtung bzw. Ausstattung zur Korrektur von Automobilblechoberflächen nach Anspruch 6, **dadurch gekennzeichnet, dass** das Gehäuse eine Stufe (10C) aufweist, die an seiner oberen Oberfläche ausgebildet ist;
wobei die Lufteinbringeinrichtung einen Handgriff (21) umfasst, der mit der Lufteinbringpassage (21C) ausgebildet ist; und
wobei die Stufe des Gehäuses mit einem Lufteinbringloch (17) ausgebildet ist, um so mit der Lufteinbringpassage des Handgriffs in Verbindung zu stehen.

10. Vorrichtung bzw. Ausstattung zur Korrektur von Automobilblechoberflächen nach Anspruch 9, **dadurch gekennzeichnet, dass** die Stufe des Gehäuses an ihren Ecken mit Gewindelöchern (19) ausgebildet ist; und
der Handgriff luftdicht an seinem nahen Ende an der Stufe des Gehäuses mittels Bolzen befestigt ist.

11. Vorrichtung bzw. Ausstattung zur Korrektur von Automobilblechoberflächen nach einem der Ansprüche 1 bis 5, **dadurch gekennzeichnet, dass** die Lufteinbringeinrichtung einen Handgriff (21) umfasst, einen Luftregler (23), der an einem nahen Ende des Handgriffs angeordnet ist, ein Luftventil (24), das an einem mittleren Abschnitt einer unteren Oberfläche des Handgriffs angeordnet ist, einen Schalthebel (25), der so angeordnet ist, dass er das Luftventil betätigt, einen Steuerungsstift (26) zum selektiven Steuern der Bewegung des Schalthebels, und einen Stopper (27), der schwenkbar in einem Ausschnitt (25A) gehaltert ist, welcher an einem freien Ende des Schalthebels so ausgebildet ist, dass er darin angehoben wird;
wobei das Luftventil durch das Betätigen des Schalthebels in Richtung zur unteren Oberfläche des Handgriffs geöffnet wird; und
wobei die Steuerung der Bewegung des Schalthebels durch den Steuerungsstift durchgeführt wird, um einen solchen offenen Zustand des Luftventils aufrecht zu erhalten.

12. Vorrichtung bzw. Ausstattung zur Korrektur von Automobilblechoberflächen nach Anspruch 11, **dadurch gekennzeichnet, dass** das Luftventil einen Ventilkörper (24A) umfasst;
wobei der Ventilkörper in einer Ventilkammer (22) vorgesehen ist, die zwischen den Lufteinbringpassagen (21A und 21B) angeordnet ist; und
wobei der Ventilkörper des Luftventils dann, wenn der Schalthebel so betätigt wird, dass er ein unteres Ende des Luftventils nach oben drückt, während des Anstoßen mit einer oberen Oberfläche des Schalthebels kontaktiert, von einem Ventilsitz angehoben wird, der in der Ventilkammer angeordnet ist, was darin resultiert, dass das Luftventil geöffnet wird, so dass die Lufteinbringpassagen miteinander in Verbindung treten können, so dass dadurch komprimierte, eingebrachte Luft in das Gehäuse durch das Lufteinbringventil strömen kann, das an der oberen Oberfläche des Gehäuses ausgebildet ist.

13. Vorrichtung bzw. Ausstattung zur Korrektur von Automobilblechoberflächen nach Anspruch 8, bei der das Drehrichtungs-Veränderungsventil an beiden seiner Enden aus der Hülse herausragt.

14. Vorrichtung bzw. Ausstattung zur Korrektur von Automobilblechoberflächen nach einem der Ansprüche 1 bis 5, **dadurch gekennzeichnet, dass** der Kolbenmechanismus den Kolben, den Zylinder und ein Kolbenführungsbauteil (88) umfasst;
wobei der Kolben in hohler Struktur konstruiert ist, was darin resultiert, dass er mit einem Mittelloch versehen ist, das sich in seiner Längsrichtung erstreckt;
wobei das Mittelloch des Kolbens mit Innengewinden (82) ausgebildet ist, in welche Außengewinde (72) des Schraubenbolzens (70) in Gewindeeingriff treten;
wobei der Kolben an seiner äußeren Umfangsoberfläche mit einer länglichen Führungsnut (83) zum Führen des Kolbenführungsbauteils ausgebildet ist; und
wobei die Führungsnut so angeordnet ist, dass sie sich in der Längsrichtung des Kolbens erstreckt.

15. Vorrichtung bzw. Ausstattung zur Korrektur von Automobilblechoberflächen nach Anspruch 3 oder 4, **dadurch gekennzeichnet, dass** die erste Abdeckungseinrichtung, das Gehäuse und die zweite Abdeckungseinrichtung integral miteinander mittels der Haltebolzen verbunden sind, welche durch Ecken des Gehäuses eingesetzt sind; und
wobei die Haltebolzen jeweils im Gewindeeingriff an ihrem entfernten Enden mit jeweils den Innengewinden (12A) stehen, die in dem zweiten Abdeckbauteil ausgebildet sind.

## Revendications

1. Equipement de correction de surface de tôle métallique d'automobile, comprenant :
un boîtier (10) ;
un mécanisme à piston (80) comprenant un cylindre (86) et un piston (81),
**caractérisé en ce que** :
ledit boîtier comporte des moyens formant trajet d'écoulement d'air (60) disposés de façon commutable à l'intérieur de celui-ci ;
des moyens d'introduction d'air (20) disposés à l'intérieur de celui-ci avec des passages d'introduction d'air (21A, 21B, 21C) pour introduire de l'air comprimé à l'intérieur dudit boîtier à travers ceux-ci ;
un mécanisme de clé à impact (30) disposé dans ledit boîtier et actionné à l'aide d'air comprimé délivré à travers lesdits moyens d'introduction d'air à l'intérieur dudit boîtier ;
un boulon fileté (70) ayant une force de rotation appliquée à celui-ci à partir dudit mécanisme de clé à impact ; et **en ce que**
ledit piston est disposé de façon mobile dans ledit cylindre d'une façon rétractable en association avec la rotation dudit boulon fileté ;
grâce à quoi lesdits moyens formant trajet d'écoulement d'air dans ledit boîtier sont commutés de façon à déplacer de façon à le rétracter ledit piston dudit mécanisme à piston, produisant la correction d'une surface de tôle métallique.

2. Equipement de correction de surface de tôle métallique d'automobile selon la revendication 1, **caractérisé en ce que** ledit mécanisme de clé à impact comprend un moteur pneumatique (40) actionné à l'aide d'air comprimé délivré à l'intérieur dudit boîtier et une clé à impact (50) actionnée par ledit moteur pneumatique ;
une soupape de commutation de sens de rotation (60) est présente pour commuter lesdits moyens formant trajet d'écoulement d'air, de façon à commuter ainsi un sens de rotation dudit moteur pneumatique dudit mécanisme de clé à impact ; et
lesdits moyens formant trajet d'écoulement d'air comprennent un premier trajet d'écoulement d'air (17, 66, 67, 15, 11A, 45A, 45C) et un deuxième trajet d'écoulement d'air (17, 66, 68, 16, 11B, 45B, 45D), qui sont commutés par ledit clapet de commutation de sens de rotation ;
grâce à quoi un sens de rotation dudit moteur à air est commuté de façon à actionner ledit piston dudit mécanisme à piston, de façon à corriger ainsi une surface de tôle métallique.

3. Equipement de correction de surface de tôle métallique d'automobile selon la revendication 1, **caractérisé en ce que** des boulons de maintien (90) sont disposés pour monter des moyens formant capot (11, 12) sur les surfaces d'extrémité dudit boîtier de façon à fermer lesdites surfaces d'extrémité ;
grâce à quoi lesdits moyens formant trajet d'écoulement d'air dans ledit boîtier sont commutés lors de l'actionnement dudit mécanisme de clé à impact de façon à actionner ledit piston dudit mécanisme à piston, produisant une correction de la surface de tôle métallique.

4. Equipement de correction de surface de tôle métallique d'automobile selon la revendication 2, **caractérisé en ce que** des boulons de maintien (90) sont disposés pour monter des moyens formant capot (11, 12) sur les surfaces d'extrémité dudit boîtier de façon à fermer lesdites surfaces d'extrémité ;
grâce à quoi un sens de rotation dudit moteur à air est commuté de façon à actionner ledit piston dudit mécanisme à piston, de façon à corriger ainsi la surface de tôle métallique.

5. Equipement de correction de surface de tôle métallique d'automobile selon l'une quelconque des revendications 1 à 4, **caractérisé en ce que** lesdits moyens d'introduction d'air comprennent une poignée (21) comportant lesdits passages d'introduction d'air formés à l'intérieur de celle-ci ; et
**en ce que** ladite poignée est disposée au-dessus dudit boîtier.

6. Equipement de correction de surface de tôle métallique d'automobile selon l'une quelconque des revendications 1 à 4, **caractérisé en ce que** ledit boîtier comprend une première partie de réception (13A) et une deuxième partie de réception (13B) ;
ladite première partie de réception comporte ledit mécanisme de clé à impact qui est reçu à l'intérieur de celle-ci ;
ledit boulon fileté (70) comporte une tête de boulon (71) ;
ladite deuxième partie de réception a ladite tête de boulon dudit boulon fileté qui est reçue à l'intérieur de celle-ci ;
ledit boîtier comporte une première ouverture (10A) formée sur l'une desdites surfaces d'extrémité de celui-ci. et une deuxième ouverture (10B) formée sur l'autre desdites surfaces d'extrémité de celui-ci ; et
ladite première ouverture est fermée à l'aide de premiers moyens formant capot (11) et ladite deuxième ouverture est fermée à l'aide de deuxièmes moyens formant capot (12).

7. Equipement de correction de surface de tôle métallique d'automobile selon la revendication 6, **caractérisé en ce que** lesdits premiers moyens formant capot sont constitués sur une surface intérieure de ceux-ci avec une paire de passages d'air (11A, 11B) constituant une partie desdits moyens formant trajet d'écoulement d'air.

8. Equipement de correction de surface de tôle métallique d'automobile selon la revendication 6, **caractérisé en ce que** ledit boîtier comporte un trou cylindrique (14) formé au-dessus de ladite première partie de réception de façon à recevoir un coussinet (65) à l'intérieur de celui-ci ;
ledit coussinet comporte, en une partie inférieure de celui-ci, sur un côté arrière droit de celui-ci, un premier trou de sortie d'air (67), et, en une partie inférieure de celui-ci sur un côté avant gauche de celui-ci, un deuxième trou de sortie d'air (68) ;
ledit boîtier comporte deux passages d'air (15, 16) formés sur les deux côtés dudit trou cylindrique (14) ;
l'un (15) desdits passages d'air est configuré de façon à communiquer avec un passage d'air (11A) desdits premiers moyens formant capot et ledit premier trou de sortie d'air dudit palier ; et
l'autre (16) dudit passage d'air est configuré de façon à communiquer avec l'autre passage d'air (11B) desdits premiers moyens formant capot et ledit deuxième trou de sortie d'air dudit palier.

9. Equipement de correction de surface de tôle métallique d'automobile selon la revendication 6, **caractérisé en ce que** ledit boîtier comporte un épaulement (10C) formé sur une surface supérieure de celui-ci ;
lesdits moyens d'introduction d'air comprennent une poignée (21) constituée avec ledit passage d'introduction d'air (21C) ; et
ledit épaulement dudit boîtier est constitué avec un trou d'introduction d'air (17) de façon à communiquer avec ledit passage d'introduction d'air de ladite poignée.

10. Equipement de correction de surface de tôle métallique d'automobile selon la revendication 9, **caractérisé en ce que** ledit épaulement dudit boîtier comporte, aux coins de celui-ci, des trous filetés (19) ; et
**en ce que** ladite poignée est fixée de façon étanche vis-à-vis de l'air à une extrémité proximale de celle-ci sur ledit épaulement dudit boîtier à l'aide de boulons.

11. Equipement de correction de surface de tôle métallique d'automobile selon l'une quelconque des revendications 1 à 5, **caractérisé en ce que** lesdits moyens d'introduction d'air comprennent une poignée (21), un régulateur d'air (23) disposé sur une extrémité proximale de ladite poignée, une soupape pneumatique (24) disposée sur une partie centrale d'une surface inférieure de ladite poignée, un levier de commutation (25) disposé de façon à actionner ladite soupape pneumatique, une broche de commande (26) destinée à commander de façon sélective le mouvement dudit levier de commutation, et un élément d'arrêt (27) supporté de façon à pouvoir pivoter dans une entaille (25A) formée à une extrémité libre dudit levier de commutation de façon à être soulevé à l'intérieur de celle-ci ;
ladite soupape pneumatique est rendue ouverte par l'actionnement dudit levier de commutation vers ladite surface inférieure de ladite poignée, et
la commande du mouvement dudit levier de commutation par ladite broche de commande est effectuée afin de maintenir cet état ouvert de ladite soupape pneumatique.

12. Equipement de correction de surface de tôle métallique d'automobile selon la revendication 11, **caractérisé en ce que** ladite soupape pneumatique comprend un corps de soupape (24A) ;
ledit corps de soupape est disposé dans une chambre de soupape (22) disposée entre lesdits passages d'introduction d'air (21A) et (21B) ; et
ledit corps de soupape de ladite soupape pneumatique, lorsque ledit levier de commutation est actionné de façon à pousser vers le haut une extrémité inférieure de ladite soupape pneumatique tout en la faisant venir en contact par butée avec une surface supérieure dudit levier de commutation, est soulevé à partir d'un siège de soupape disposé dans ladite chambre de soupape, ce qui fait que ladite soupape pneumatique est rendue ouverte, de telle sorte que lesdits passages d'introduction d'air puissent être autorisés à communiquer . entre eux, de façon à permettre ainsi à de l'air comprimé introduit de s'écouler à l'intérieur dudit boîtier à travers ledit trou d'introduction d'air formé sur ladite surface supérieure dudit boîtier.

13. Equipement de correction de surface de tôle métallique d'automobile selon la revendication 8, dans lequel ladite soupape de commutation de sens de rotation fait saillie aux deux extrémités de celle-ci à partir dudit coussinet.

14. Equipement de correction de surface de tôle métallique d'automobile selon l'une quelconque des revendications 1 à 5, **caractérisé en ce que** ledit mécanisme à piston comprend ledit piston, ledit cylindre et un élément de guidage de piston (88) ;
ledit piston est construit sous la forme d'une structure creuse, ce qui fait qu'il comporte à l'intérieur de celui-ci un trou central qui s'étend dans une direction longitudinale de celui-ci ;
ledit trou central dudit piston comporte des filetages femelles (82) avec lesquels s'engrènent par vissage des filetages mâles (72) dudit boulon fileté (70) ;
ledit piston comporte, sur une surface périphérique extérieure de celui-ci, une rainure de guidage allongée (83) pour guider ledit élément de guidage de piston ; et
ladite rainure de guidage est configurée de façon à s'étendre dans la direction longitudinale dudit piston.

15. Equipement de correction de surface de tôle métallique d'automobile selon la revendication 3 ou 4, **caractérisé en ce que** lesdits premiers moyens formant capot, ledit boîtier et lesdits deuxièmes moyens formant capot sont reliés d'une seule pièce entre eux à l'aide desdits boulons de maintien insérés à travers des coins dudit boîtier ; et
**en ce que** lesdits boulons de maintien s'engrènent chacun par vissage à une extrémité distale de ceux-ci avec chacune des vis femelles (12A) formées dans ledit deuxième élément formant capot.
